# EUROPEAN PATENT APPLICATION

(11) **EP 4 787 954 A1**
(43) Date of publication of application: **05.08.2026**
(21) Application number: 24870430.6
(22) Date of filing: 09.09.2024
(51) Int. Cl.: H04W 28/26

(54) **COMMUNICATION METHOD AND APPARATUS**

(30) Priority: 28.09.2023 CN 202311281517
(71) Applicant: HUAWEI TECHNOLOGIES CO., LTD., Shenzhen, Guangdong 518129 (CN)
(72) Inventor: LI, Jie, Shenzhen, Guangdong 518129 (CN); PENG, Wenjie, Shenzhen, Guangdong 518129 (CN); LI, Xiangyu, Shenzhen, Guangdong 518129 (CN)
(74) Representative: Pfenning, Meinig & Partner mbB
(86) International application number: PCT/CN2024/117769
(87) International publication number: WO 2025/066885

(57) **Abstract**

Embodiments of this application relate to the communication field, and provide a communication method and apparatus, to reduce interference to a radio access network device. The method includes: A terminal device obtains a first area; and in the first domain, performs data transmission on a second frequency band, or maintains a radio resource control RRC inactive state or an RRC idle state, where data transmission is barred on at least one first frequency band in the first domain, and the at least one first frequency band is different from the second frequency band.

## Description

This application claims priority to Chinese Patent Application No. 202311281517.8, filed with the China National Intellectual Property Administration on September 28, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

An uncrewed aerial system (uncrewed aerial system, UAS) is introduced into the 3rd generation partnership project (3rd generation partnership project, 3GPP) standard to meet communication requirements of an uncrewed aerial vehicle (uncrewed aerial vehicle, UAV). With popularization of the UAV, a base station can receive more signals from a terminal device, for example, a ground terminal (like a mobile phone or a computer) and an air terminal (like a UAV), thereby increasing interference to the base station.

Therefore, how to reduce interference to the base station is an urgent problem to be resolved currently.

### SUMMARY

Embodiments of this application provide a communication method and apparatus, to reduce interference to a radio access network device.

According to a first aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: obtaining a first domain, where data transmission is barred on at least one first frequency band in the first domain; and in the first domain, performing data transmission on a second frequency band, or maintaining a radio resource control RRC inactive state or an RRC idle state, where the at least one first frequency band is different from the second frequency band.

According to this solution, in the first domain, the terminal device can choose to perform data transmission on the second frequency band other than the first frequency band, or does not perform data transmission (that is, maintains the RRC inactive state or the RRC idle state). Because no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

In a possible design, before the terminal device enters the first domain, the communication method further includes: receiving second indication information, where the second indication information indicates the terminal device to perform data transmission on the second frequency band, or the second indication information indicates the terminal device to release an RRC connection.

In a possible design, before receiving the second indication information, the communication method further includes: sending a first request message, where the first request message is used to request to perform data transmission on the second frequency band, or the first request message is used to request to release the RRC connection.

Based on this possible design, the terminal device senses the first domain, and actively requests RRC connection release or performs data transmission on the second frequency band (that is, the terminal device sends the first request message). Therefore, the radio access network device does not need to sense the first domain, and only needs to respond to the first request message (that is, the radio access network device sends the second indication information), thereby reducing a computation amount of the radio access network device.

In a possible design, the communication method further includes: determining a first measurement result, where the first measurement result includes a measurement result corresponding to at least one frequency; and when one or more of the at least one frequency are located in the second frequency band, the first request message is used to request to perform data transmission on the second frequency band; or when each of the at least one frequency is located in the at least one first frequency band, the first request message is used to request to release the RRC connection.

In a possible design, when a frequency of a primary cell of the terminal device is located in the first frequency band, and a frequency of a secondary cell of the terminal device is located in the second frequency band, that the first request message is used to request to perform data transmission on the second frequency band includes: The first request message is used to request to perform data transmission in the secondary cell.

In a possible design, when a frequency of a primary cell of the terminal device is located in the second frequency band, and a frequency of a secondary cell of the terminal device is located in the first frequency band, that the first request message is used to request to perform data transmission on the second frequency band includes: The first request message is used to request to perform data transmission in the primary cell.

In a possible design, before receiving the second indication information, the communication method further includes: determining a first measurement result, where the first measurement result is used to determine the second indication information; and sending the first measurement result.

Based on this possible design, the radio access network device senses the first domain, and indicates the terminal device to release the RRC connection or perform data transmission on the second frequency band (that is, send the second indication information to the terminal device), thereby reducing a processing computation amount of the terminal device, and saving computing power for the terminal device.

In a possible design, the first measurement result includes a measurement result corresponding to the at least one frequency; and when one or more of the at least one frequency are located in the second frequency band, the second indication information indicates the terminal device to perform data transmission on the second frequency band; or when each of the at least one frequency is located in the at least one first frequency band, the second indication information indicates the terminal device to release the RRC connection.

In a possible design, before receiving the second indication information, the communication method further includes: sending third indication information, where the third indication information indicates the at least one first frequency band, and the third indication information is used to determine the second indication information.

In a possible design, the communication method further includes: sending fourth indication information, where the fourth indication information indicates the first domain, and the fourth indication information is used to determine the second indication information.

Based on this possible design, after obtaining the first domain, the radio access network device may determine sending time of the second indication information based on the first domain. For example, the radio access network device may learn of a location of the terminal device in real time, to determine time before the terminal device enters the first domain. Therefore, before the terminal device enters the first domain, the terminal device sends the second indication information, so that the terminal device can perform data transmission on the second frequency band in the first domain, or maintain the RRC inactive state or the RRC idle state.

In a possible design, the communication method further includes: sending a second measurement result, where the second measurement result is a measurement result obtained after the terminal device leaves the first domain; or sending a second request message after the terminal device leaves the first domain, where the second request message is used to request to set up the RRC connection.

In a possible design, after sending the second measurement result, the communication method further includes: receiving fifth indication information, where the fifth indication information indicates the terminal device to perform data transmission on a third frequency band, and the second measurement result includes a measurement result corresponding to a frequency in the third frequency band.

In a possible design, after sending the second request message, the communication method further includes: receiving sixth indication information, where the sixth indication information indicates the terminal device to set up the RRC connection.

According to a second aspect, a communication method is provided. The method may be performed by a radio access network device, or may be performed by a component of the radio access network device, for example, a processor, a chip, or a chip system of the radio access network device, or may be implemented by a logical module or software that can implement all or some functions of the radio access network device. The method includes: sending second indication information, where the second indication information indicates a terminal device to perform data transmission on a second frequency band, or the second indication information indicates the terminal device to release an RRC connection, the second frequency band is different from at least one first frequency band in a first domain, and the radio access network device is a serving radio access network device of the terminal device, and is barred from performing data transmission on the at least one first frequency band in the first domain.

According to this solution, in the first domain, the radio access network device sends the second indication information to the terminal device. Therefore, the terminal device can choose to perform data transmission on the second frequency band other than the first frequency band, or does not perform data transmission (that is, maintains an RRC inactive state or an RRC idle state). Because no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

In a possible design, sending the second indication information includes: sending the second indication information before the terminal device enters the first domain.

In a possible design, before sending the second indication information, the communication method further includes: receiving a first request message, where the first request message is used to request to perform data transmission on the second frequency band, or the first request message is used to request to release the RRC connection.

In a possible design, before sending the second indication information, the communication method further includes: receiving a first measurement result, where the first measurement result is used to determine the second indication information.

In a possible design, before sending the second indication information, the communication method further includes: receiving third indication information, where the third indication information indicates the at least one first frequency band, and the third indication information is used to determine the second indication information.

In a possible design, the communication method further includes: sending fourth indication information, where the fourth indication information indicates the first domain, and the fourth indication information is used to determine the second indication information.

In a possible design, when a frequency of a primary cell of the terminal device is located in the first frequency band, and a frequency of a secondary cell of the terminal device is located in the second frequency band, that the second indication information indicates the terminal device to perform data transmission on the second frequency band includes: The second indication information indicates the terminal device to perform data transmission in the secondary cell.

In a possible design, when a frequency of a primary cell of the terminal device is located in the second frequency band, and a frequency of a secondary cell of the terminal device is located in the first frequency band, that the second indication information indicates the terminal device to perform data transmission on the second frequency band includes: The second indication information indicates the terminal device to perform data transmission in the primary cell.

In a possible design, the communication method further includes: receiving a second measurement result, where the second measurement result is a measurement result obtained after the terminal device leaves the first domain; or receiving a second request message, where the second request message is used to request to set up the RRC connection.

In a possible design, after receiving the second measurement result, the communication method further includes: sending fifth indication information, where the fifth indication information indicates the terminal device to perform data transmission on a third frequency band, and the second measurement result includes a measurement result corresponding to a frequency in the third frequency band.

In a possible design, after receiving the second request message, the communication method further includes: sending sixth indication information, where the sixth indication information indicates the terminal device to set up the RRC connection.

With reference to the first aspect and the second aspect, in a possible design, that the second indication information indicates the terminal device to perform data transmission on the second frequency band includes: The second indication information indicates the terminal device to switch to the second frequency band.

With reference to the first aspect and the second aspect, in a possible design, that the first request message is used to request to perform data transmission on the second frequency band includes: The first request message is used to request to switch to the second frequency band.

With reference to the first aspect and the second aspect, in a possible design, when the frequency of the primary cell of the terminal device is located in the first frequency band, and the frequency of the secondary cell of the terminal device is located in the second frequency band, that the first request message is used to request to perform data transmission in the secondary cell includes: The first request message is used to request to perform data transmission only in the secondary cell, or the first request message is used to request to change the secondary cell to the primary cell.

With reference to the first aspect and the second aspect, in a possible design, when the frequency of the primary cell of the terminal device is located in the first frequency band, and the frequency of the secondary cell of the terminal device is located in the second frequency band, that the second indication information indicates the terminal device to perform data transmission in the secondary cell includes: The second indication information indicates the terminal device to perform data transmission only in the secondary cell, or the second indication information indicates the terminal device to change the secondary cell to the primary cell.

With reference to the first aspect and the second aspect, in a possible design, when the frequency of the primary cell of the terminal device is located in the second frequency band, and the frequency of the secondary cell of the terminal device is located in the first frequency band, that the first request message is used to request to perform data transmission in the primary cell includes: The first request message is used to request to perform data transmission only in the primary cell, or the first request message is used to request to delete or deactivate the secondary cell.

In a possible design, when the frequency of the primary cell of the terminal device is located in the second frequency band, and the frequency of the secondary cell of the terminal device is located in the first frequency band, that the second indication information indicates the terminal device to perform data transmission in the primary cell includes: The second indication information indicates the terminal device to perform data transmission only in the primary cell, or the second indication information indicates the terminal device to delete or deactivate the secondary cell.

With reference to the first aspect and the second aspect, in a possible design, that the fifth indication information indicates the terminal device to perform data transmission on the third frequency band includes: The fifth indication information indicates the terminal device to switch to the third frequency band.

For technical effects brought by any possible design of the second aspect, refer to technical effects brought by a corresponding design of the first aspect. Details are not described herein again.

According to a third aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: obtaining a first trigger condition, where the first trigger condition is determined based on a first domain, and data transmission is barred on at least one first frequency band in the first domain; and when the first trigger condition is met, performing data transmission on a fourth frequency band, or maintaining an RRC inactive state or an RRC idle state, where the at least one first frequency band is different from the fourth frequency band.

According to this solution, because the first trigger condition is determined based on the first domain, and data transmission is barred on the at least one first frequency band in the first domain, the first trigger condition may be flexibly set. For example, the first trigger condition may be determined based on a distance between the first domain and the terminal device. For example, the terminal device being about to enter the first domain may be used as a condition for meeting the first trigger condition, so that when the terminal device is about to enter the first domain, the terminal device can perform data transmission on the fourth frequency band, or maintain the RRC inactive state or the RRC idle state, where the at least one first frequency band is different from the fourth frequency band. Therefore, in the first domain, the terminal device can maintain data transmission on the fourth frequency band, or maintain the RRC inactive state or the RRC idle state. Because the RRC inactive state or the RRC idle state is maintained in the first domain, that is, no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

In a possible design, the communication method further includes: sending a third measurement result is sent, where the third measurement result includes a measurement result corresponding to at least one frequency; and receiving seventh indication information, where the seventh indication information indicates the terminal device to perform data transmission on a fourth frequency band, or the seventh indication information indicates the terminal device to release an RRC connection, and one or more of the at least one frequency are located in the fourth frequency band.

In a possible design, the communication method further includes: obtaining a second trigger condition, where the second trigger condition is determined based on the first domain; and sending a fourth measurement result when the second trigger condition is met, where the fourth measurement result is a measurement result obtained after the terminal device leaves the first domain.

Based on this possible design, the terminal device reports the fourth measurement result based on triggering of the second trigger condition. Because the fourth measurement result is the measurement result obtained after the terminal device leaves the first domain, the radio access network device may process, based on the fourth measurement result, a case obtained after the terminal device leaves the first domain, for example, may indicate the terminal device to set up the RRC connection.

In a possible design, the communication method further includes: receiving eighth indication information, where the eighth indication information indicates the terminal device to perform data transmission on a fifth frequency band, or the eighth indication information indicates the terminal device to set up the RRC connection, and the fourth measurement result includes a measurement result corresponding to a frequency in the fifth frequency band.

In a possible design, the communication method further includes: sending ninth indication information, where the ninth indication information indicates the first domain, and the ninth indication information is used to determine the first trigger condition.

Based on this possible design, the terminal device notifies the radio access network device of the first domain, so that the radio access network device can learn of the first domain, and determine the first trigger condition and/or the second trigger condition based on the first domain.

In a possible design, the communication method further includes: sending tenth indication information, where the tenth indication information indicates the at least one first frequency band, and the tenth indication information is used to determine the first trigger condition.

According to a fourth aspect, a communication method is provided. The method may be performed by a radio access network device, or may be performed by a component of the radio access network device, for example, a processor, a chip, or a chip system of the radio access network device, or may be implemented by a logical module or software that can implement all or some functions of the radio access network device. The method includes: receiving a third measurement result, where the third measurement result is a measurement result existing before a terminal device enters a first domain, the third measurement result includes a measurement result corresponding to at least one frequency, data transmission is barred on at least one first frequency band in the first domain, and a serving radio access network device of the terminal device is the radio access network device; and sending seventh indication information, where the seventh indication information indicates the terminal device to perform data transmission on a fourth frequency band, or the seventh indication information indicates the terminal device to release an RRC connection, one or more of the at least one frequency are located in the fourth frequency band, and the at least one first frequency band is different from the fourth frequency band.

According to this solution, the radio access network device can determine, based on the third measurement result, whether the terminal device performs data transmission on the fourth frequency band or releases the RRC connection. The third measurement result is the measurement result existing before the terminal device enters the first domain. Therefore, after receiving the third measurement result, the radio access network device may send the seventh indication information, so that in the first domain, the terminal device can perform data transmission on the fourth frequency band or release the RRC connection based on an indication of the seventh indication information. Because no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

In a possible design, before receiving the third measurement result, the communication method further includes: obtaining a first domain, where the first domain is used to determine a first trigger condition; and sending the first trigger condition, where the first trigger condition is used to trigger the terminal device to report the third measurement result.

In a possible design, the communication method further includes: receiving a fourth measurement result, where the fourth measurement result is a measurement result obtained after the terminal device leaves the first domain; and sending eighth indication information, where the eighth indication information indicates the terminal device to perform data transmission on the fifth frequency band, or the eighth indication information indicates the terminal device to set up an RRC connection, and the fourth measurement result includes a measurement result corresponding to a frequency in the fifth frequency band.

In a possible design, the communication method further includes: sending a second trigger condition, where the second trigger condition is determined based on the first domain, and the second trigger condition is used to trigger the terminal device to report the fourth measurement result.

In a possible design, the communication method further includes: receiving ninth indication information, where the ninth indication information indicates the first domain, and the ninth indication information is used to determine the first trigger condition.

In a possible design, the communication method further includes: receiving tenth indication information, where the tenth indication information indicates the at least one first frequency band, and the tenth indication information is used to determine the first trigger condition.

For technical effects brought by any possible design of the fourth aspect, refer to the technical effects brought by a corresponding design of the third aspect. Details are not described herein again.

With reference to the third aspect and the fourth aspect, in a possible design, that the seventh indication information indicates the terminal device to perform data transmission on the fourth frequency band includes: The seventh indication information indicates the terminal device to switch to the fourth frequency band.

With reference to the third aspect and the fourth aspect, in a possible design, the first trigger condition includes: A distance between the terminal device and a first location is less than or equal to a first threshold, where the first location is determined based on the first domain.

With reference to the third aspect and the fourth aspect, in a possible design, the first trigger condition includes: A sum of a distance between the terminal device and a first location and a first offset value is less than or equal to a first threshold, where the first location is determined based on the first domain; or a difference between the distance between the terminal device and the first location and the first offset value is less than or equal to the first threshold.

With reference to the third aspect and the fourth aspect, in a possible design, the first location is a location of a reference point that is in a plurality of reference points on a boundary of the first domain and that is closest to the terminal device; the first location is located on a line formed by connecting any two reference points on the boundary of the first domain; or the first location is located in the first domain.

With reference to the third aspect and the fourth aspect, in a possible design, that the distance between the terminal device and the first location is less than or equal to the first threshold includes: The distance between the terminal device and the first location is less than or equal to the first threshold within first duration; that the sum of the distance between the terminal device and the first location and the first offset value is less than or equal to the first threshold includes: The sum of the distance between the terminal device and the first location and the first offset value is less than or equal to the first offset value within the first duration; and that the difference between the distance between the terminal device and the first location and the first offset value is less than or equal to the first threshold includes: The difference between the distance between the terminal device and the first location and the first offset value is less than or equal to the first threshold within the first duration.

According to this optional solution, the terminal device determines that a first trigger threshold is met when the distance between the terminal device and the first location (or the sum of/the difference between the distance between the terminal device and the first location and the first offset value) is less than or equal to the first threshold in the first duration, to ensure that the terminal device is always near the first domain. Therefore, impact of a ping-pong effect is eliminated, and the terminal device is prevented from mistakenly triggering the first trigger condition.

With reference to the third aspect and the fourth aspect, in a possible design, the first trigger condition further includes: The terminal device performs data transmission on one or more of the at least one first frequency band.

With reference to the third aspect and the fourth aspect, in a possible design, that the terminal device performs data transmission on the one or more of the at least one first frequency band includes: Before the terminal device enters the first domain, the terminal device performs data transmission on the one or more of the at least one first frequency band.

Based on this possible design, because data transmission is barred on the at least one first frequency band in the first domain, before the terminal device enters the first domain, and the terminal device performs data transmission on the one or more of the at least one first frequency band, the terminal device needs to determine, based on a relationship between the distance between the terminal device and the first location and the first threshold, whether to report the third measurement result. Therefore, data transmission is not performed on the at least one first frequency band in the first domain. When the terminal device does not perform data transmission on any one of the at least one first frequency band, no data transmission on the at least one first frequency band in the first domain can be implemented on the terminal device without frequency band switching or RRC state transition. In this case, the terminal device does not need to trigger reporting.

With reference to the third aspect and the fourth aspect, in a possible design, the first trigger condition further includes: A distance change of the terminal device in a unit time is greater than or equal to a third threshold.

Based on this possible design, the terminal device may determine, based on a relationship between the distance change of the terminal device in the unit time and the third threshold, whether the terminal device gradually approaches a center of the first domain, to ensure that the terminal device can enter the first domain after the third measurement result is reported when the first trigger condition is met, so that a solution in which the terminal device performs data transmission on the fourth frequency band or releases the RRC connection based on an indication of the seventh indication information can be implemented in the first domain, and data transmission is barred on the at least one first frequency band in the first domain, that is, the terminal device implements an NTZ mechanism.

With reference to the third aspect and the fourth aspect, in a possible design, when a frequency of a primary cell of the terminal device is located in the first frequency band, and a frequency of a secondary cell of the terminal device is located in the fourth frequency band, that the seventh indication information indicates the terminal device to perform data transmission on the fourth frequency band includes: The seventh indication information indicates to perform data transmission in the secondary cell.

With reference to the third aspect and the fourth aspect, in a possible design, when a frequency of a primary cell of the terminal device is located in the first frequency band, and a frequency of a secondary cell of the terminal device is located in the fourth frequency band, that the seventh indication information indicates to perform data transmission in the secondary cell includes: The seventh indication information indicates the terminal device to perform data transmission only in the secondary cell, or the seventh indication information indicates the terminal device to change the secondary cell to the primary cell.

With reference to the third aspect and the fourth aspect, in a possible design, when a frequency of a primary cell of the terminal device is located in the fourth frequency band, and a frequency of a secondary cell of the terminal device is located in the first frequency band, that the seventh indication information indicates the terminal device to perform data transmission on the fourth frequency band includes: The seventh indication information indicates to perform data transmission in the primary cell.

With reference to the third aspect and the fourth aspect, in a possible design, when a frequency of a primary cell of the terminal device is located in the fourth frequency band, and a frequency of a secondary cell of the terminal device is located in the first frequency band, that the seventh indication information indicates to perform data transmission in the primary cell includes: The seventh indication information indicates the terminal device to perform data transmission only in the primary cell, or the seventh indication information indicates the terminal device to delete or deactivate the secondary cell.

With reference to the third aspect and the fourth aspect, in a possible design, the second trigger condition includes: A distance between the terminal device and a second location is greater than or equal to a fourth threshold, where the second location is determined based on the first domain.

With reference to the third aspect and the fourth aspect, in a possible design, the second trigger condition includes: A sum of a distance between the terminal device and a second location and a second offset value is greater than or equal to a fourth threshold, where the second location is determined based on the first domain; or a difference between the distance between the terminal device and the second location and the second offset value is greater than or equal to the fourth threshold.

With reference to the third aspect and the fourth aspect, in a possible design, the second location is a location of a reference point that is in a plurality of reference points on a boundary of the first domain and that is closest to the terminal device; the second location is located on a line formed by connecting any two reference points on the boundary of the first domain; or the second location is located in the first domain.

With reference to the third aspect and the fourth aspect, in a possible design, that the distance between the terminal device and the second location is greater than or equal to the fourth threshold includes: The distance between the terminal device and the second location is greater than or equal to the fourth threshold within second duration; that the sum of the distance between the terminal device and the second location and the second offset value is greater than or equal to the fourth threshold includes: The sum of the distance between the terminal device and the second location and the second offset value is greater than or equal to the fourth threshold within the second duration; and that the difference between the distance between the terminal device and the second location and the second offset value is greater than or equal to the fourth threshold includes: The difference between the distance between the terminal device and the second location and the second offset value is greater than or equal to the fourth threshold within the second duration.

Based on this possible design, the terminal device determines that a second trigger threshold is met when the distance between the terminal device and the second location is greater than or equal to the fourth threshold within the second duration, to ensure that the terminal device has left the first domain. Therefore, impact of a ping-pong effect is eliminated, and the terminal device is prevented from mistakenly triggering the second trigger condition.

With reference to the third aspect and the fourth aspect, in a possible design, the second trigger condition further includes: The terminal device performs data transmission on one or more frequency bands other than the at least one first frequency band, and the fourth measurement result includes a measurement result corresponding to a frequency in the one or more frequency bands.

With reference to the third aspect and the fourth aspect, in a possible design, that the terminal device performs data transmission on the one or more frequency bands other than the at least one first frequency band includes: After the terminal device leaves the first domain, the terminal device performs data transmission on the one or more frequency bands other than the at least one first frequency band.

Based on this possible design, because data transmission is barred on the at least one first frequency band in the first domain, the terminal device does not perform data transmission on the first frequency band in the first domain (for example, performs data transmission on the fourth frequency band based on an instruction of the seventh indication information). Therefore, after leaving the first domain, the terminal device still performs data transmission on the fourth frequency band. In this case, the terminal device may determine, based on a relationship between the distance between the terminal device and the second location and the fourth threshold, whether to report the fourth measurement result, to further determine whether to switch to a frequency band.

With reference to the third aspect and the fourth aspect, in a possible design, the second trigger condition further includes: A distance change of the terminal device in a unit time is greater than or equal to a fifth threshold.

According to a fourth aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. When the terminal device is in a radio resource control RRC inactive state or an RRC idle state, the method includes: receiving first indication information, and receiving the first indication information, where the first indication information indicates a first domain, and data transmission is barred on at least one first frequency band in the first domain; receiving a system message, where the system message indicates a unified access control parameter; and determining, when the unified access control parameter indicates that access of a service corresponding to a first access identity AI and/or a first access category AC is allowed, and the terminal device is located in the first domain, that an access attempt is barred, where the first AI is a service identifier of the terminal device, and the first AC is a service type of the terminal device; or determining, when the unified access control parameter indicates that access of the service corresponding to the first AI and/or the first AC is allowed, and the terminal device is located outside the first domain, that the access attempt is allowed.

According to this solution, when the terminal device is in the RRC inactive state or the RRC idle state, if the terminal device needs to send data, the terminal device first needs to perform access barring check, and determines a location of the terminal device based on the access barring check, that is, whether the terminal device is located in the first domain. If the terminal device is located in the first domain, it is considered that the access attempt of the terminal device is barred, and the terminal device cannot request to perform RRC setup, so that the terminal device can maintain the RRC inactive state or the RRC idle state in the first domain.

In a possible design, determining, when the unified access control parameter indicates that access of the service corresponding to the first AI and/or the first AC is allowed, and the terminal device is located in the first domain, that the access attempt is barred includes: performing access barring check based on the first AI and/or the first AC and the unified access control parameter, to obtain a first result, where when the unified access control parameter indicates that access of the terminal device corresponding to the AI and/or the AC is allowed, the first result is that the access attempt is allowed, or when the unified access control parameter indicates that access of the terminal device corresponding to the AI and/or the AC is barred, the first result is that the access attempt is barred; and when the terminal device is located in the first domain, and the first result is that the access attempt is allowed, changing the first result to that the access attempt is barred.

In a possible design, determining, when the unified access control parameter indicates that access of a terminal device corresponding to the AI and/or the AC is allowed, and the terminal device is located in the first domain, that the access attempt is barred includes: when the terminal device is located in the first domain, performing access barring check based on the first AI and/or the first AC and the unified access control parameter, to obtain a second result, where the second result is that the access attempt is barred.

According to a sixth aspect, a communication apparatus is provided, to implement various methods. The communication apparatus may be the terminal device in the first aspect, the third aspect, or the fifth aspect, or an apparatus included in the terminal device, for example, a chip or a chip system; or the communication apparatus may be the radio access network device in the second aspect or the fourth aspect, or an apparatus included in the radio access network device, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver, a transceiver machine, or a communication interface.

According to a seventh aspect, a communication apparatus is provided, and includes a processor and a memory. The memory is configured to store computer instructions. When the processor executes the instructions, the communication apparatus is caused to perform the method according to any one of the foregoing aspects. The communication apparatus may be the terminal device in the first aspect, the third aspect, or the fifth aspect, or an apparatus included in the terminal device, for example, a chip or a chip system; or the communication apparatus may be the radio access network device in the second aspect or the fourth aspect, or an apparatus included in the radio access network device, for example, a chip or a chip system.

According to an eighth aspect, a communication apparatus is provided, and includes a processor and a communication interface. The communication interface is configured to communicate with a module outside the communication apparatus. The processor is configured to execute a computer program or instructions, to cause the communication apparatus to perform the method according to any one of the foregoing aspects. The communication apparatus may be the terminal device in the first aspect, the third aspect, or the fifth aspect, or an apparatus included in the terminal device, for example, a chip or a chip system; or the communication apparatus may be the radio access network device in the second aspect or the fourth aspect, or an apparatus included in the radio access network device, for example, a chip or a chip system.

According to a ninth aspect, a communication apparatus is provided, and includes at least one processor. The processor is configured to execute a computer program or instructions stored in a memory, to cause the communication apparatus to perform the method according to any one of the foregoing aspects. The memory may be coupled to the processor, or may be independent of the processor. The communication apparatus may be the terminal device in the first aspect, the third aspect, or the fifth aspect, or an apparatus included in the terminal device, for example, a chip or a chip system; or the communication apparatus may be the radio access network device in the second aspect or the fourth aspect, or an apparatus included in the radio access network device, for example, a chip or a chip system.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus according to any one of the sixth aspect to the ninth aspect is a chip, a sending action/function of the communication apparatus may be understood as outputting or sending information, and a receiving action/function of the communication apparatus may be understood as inputting or receiving information.

According to a tenth aspect, a computer-readable storage medium is provided. The computer-readable storage medium stores a computer program or instructions. When the computer program or the instructions are run on a communication apparatus or a computer, the communication apparatus or the computer is caused to perform the method according to any one of the foregoing aspects.

According to an eleventh aspect, a computer program product including instructions is provided. When the computer program product runs on a communication apparatus or a computer, the communication apparatus or the computer is caused to perform the method according to any one of the foregoing aspects.

For technical effects brought by any one of the designs of the sixth aspect to the eleventh aspect, refer to the technical effects brought by different designs of the first aspect to the fifth aspect. Details are not described herein again.

### BRIEF DESCRIPTION OF DRAWINGS

FIG. 1 is a schematic flowchart of a cell handover according to this application;
FIG. 2 is a diagram of RRC state switching according to this application;
FIG. 3 is a diagram of a system logical framework of an uncrewed aerial vehicle UAV device to which an embodiment of this application is applied;
FIG. 4 is a diagram of communication between a UAV and a radio access network device according to an embodiment of this application;
FIG. 5 is another diagram of communication between a UAV and a radio access network device according to an embodiment of this application;
FIG. 6 is a diagram of a structure of a communication apparatus according to this application;
FIG. 7 is a schematic flowchart of a communication method according to this application;
FIG. 8 is a schematic flowchart of another communication method according to this application;
FIG. 9 is a schematic flowchart of another communication method according to this application;
FIG. 10 is a schematic flowchart of another communication method according to this application;
FIG. 11 is a schematic flowchart of another communication method according to this application;
FIG. 12 is a schematic flowchart of another communication method according to this application;
FIG. 13 is a diagram of a first location according to this application;
FIG. 14 is a diagram of another first location according to this application;
FIG. 15 is a schematic flowchart of another communication method according to this application;
FIG. 16 is a schematic flowchart of another communication method according to this application;
FIG. 17 is a diagram of a second location according to this application;
FIG. 18 is a schematic flowchart of another communication method according to this application;
FIG. 19 is a diagram of a structure of another communication apparatus according to this application; and
FIG. 20 is a diagram of a structure of another communication apparatus according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c. Herein, a, b, and c may be singular or plural.

In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, for same or similar parts of embodiments, mutual reference may be made between embodiments, unless otherwise specified. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding the technical solutions in embodiments of this application, related technologies of this application are first briefly described below.

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c. Herein, a, b, and c may be singular or plural.

In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, for same or similar parts of embodiments, mutual reference may be made between embodiments, unless otherwise specified. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding the technical solutions in embodiments of this application, related technologies of this application are first briefly described below.

### 1. Cell handover (handover):

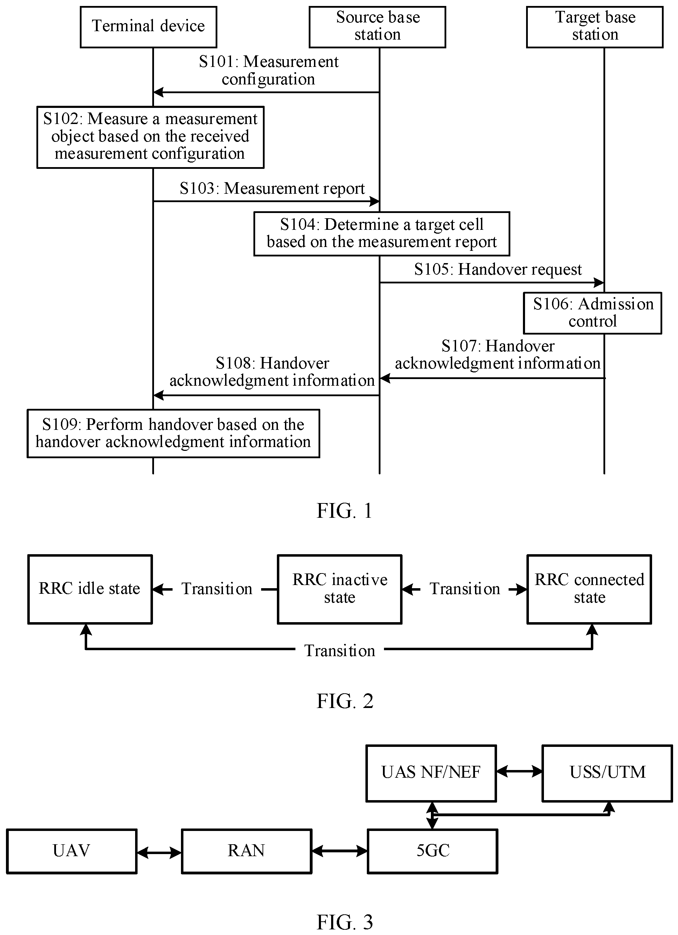

For example, in a 5th generation (5th generation, 5G) or new radio (new radio, NR) system, a cell handover procedure may include steps S101 to S109 shown in FIG. 1.

Step S101: A source base station (which may also be referred to as a serving base station before handover) of a terminal device may send a measurement configuration to the terminal device; and correspondingly, the terminal device receives the measurement configuration from the source base station.

Optionally, the measurement configuration may include a measurement object (for example, a serving cell or a neighboring cell), a trigger event for measurement reporting, and the like.

For example, the trigger event may include an event A1, an event A2, an event A3, an event A4, an event A5, and the like. The event A1 is that signal quality of a serving cell is greater than a first preset threshold; the event A2 is that the signal quality of the serving cell is less than a second preset threshold; the event A3 is that signal quality of a neighboring cell is greater than the signal quality of the serving cell; the event A4 is that the signal quality of the neighboring cell is greater than a third preset threshold; and the event A5 is that the signal quality of the serving cell is less than the second preset threshold, and the signal quality of the neighboring cell is greater than the third preset threshold.

Step S102: The terminal device measures the measurement object based on the received measurement configuration.

Optionally, if a measurement result of a measurement object measured by the terminal device in a specific time period meets a trigger event for measurement reporting, the terminal device is triggered to report the measurement result.

Optionally, in a specific time period, when a measurement result of a cell meets a trigger event for measurement reporting, an identifier of the cell may be added to a cell trigger list (cell triggered list).

For example, a specific time period is configured by the source base station. The specific time period may also be referred to as time to trigger (time to trigger, TTT).

The measurement result is a result obtained by performing measurement at a layer 1 (for example, a physical (physical, PHY) layer) and filtering at a layer 3 (for example, a radio resource control (radio resource control, RRC) layer).

Step S103: The terminal device sends the measurement result to the source base station; and correspondingly, the source base station receives the measurement report from the terminal device.

Step S104: After receiving the measurement result, the source base station determines a target cell based on a measurement report.

For example, the source base station evaluates the measurement result in the measurement result, to determine the target cell.

Step S105: The source base station sends a handover request to a target base station to which the target cell belongs; and correspondingly, the target base station receives the handover request from the source base station.

For example, the handover request includes information required for handover, such as an identifier (identifier, ID) of the target cell.

Step S106: The target base station performs admission control.

Optionally, admission control may be understood as determining whether the terminal device is supported in accessing the target base station.

When the terminal device is supported in accessing the target base station, S107 is performed.

Step S107: The target base station sends a handover acknowledgment information to the source base station; and correspondingly, the source base station receives the handover acknowledgment information from the target base station.

For example, the handover acknowledgment information includes RRC reconfiguration (reconfiguration) information (such as an ID of the target cell) related to the target cell.

Step S108: The source base station forwards the handover acknowledgment information to the terminal device; and correspondingly, the terminal device receives the handover acknowledgment information from the source base station.

Step S109: The terminal device performs handover based on the handover acknowledgment information.

For example, the terminal device may perform RRC reconfiguration based on the RRC reconfiguration information. After the RRC reconfiguration is completed, the terminal device sends RRC reconfiguration success information to the target base station. Correspondingly, the target base station receives the RRC reconfiguration success information from the terminal device. In this case, it may be considered that handover of the terminal device on a radio access network (radio access network, RAN) side succeeds.

Optionally, the handover in this application is generally handover, a cell change, or the like that is controlled by a radio access network device (for example a base station) and a terminal device in an RRC connected state. For example, the handover in this application is generally handover, a cell change, or the like that is controlled by the base station and the terminal device in the RRC connected state.

### 2. RRC state:

It is defined in long term evolution (long term evolution, LTE) that RRC states include an RRC idle state (RRC-idle) and an RRC connected state (RRC-connected). In the RRC idle state, uplink data and/or downlink data transmission cannot be performed, and a context of a terminal device is released. The RRC idle state may be understood as a sleep state. In the RRC connected state, uplink data and/or downlink data transmission can be performed, and a context of a terminal device can be set up. The RRC connected state may be understood as an active state.

However, in a running process of an application of the terminal device, data transmission needs to be frequently performed. Therefore, frequent switching between the RRC idle state and the RRC connected state needs to be performed. The switching is performed at a cost of signaling and a delay, that is, frequent switching between the RRC idle state and the RRC connected state increases signaling overheads and a data transmission delay, thereby greatly reducing system performance. Therefore, an RRC inactive state (RRC-inactive) is defined in NR, to reduce signaling load and a delay. The RRC inactive state has some features of the RRC idle state and the RRC connected state. For example, uplink data and/or downlink data transmission cannot be performed in the RRC inactive state. However, the terminal device needs to store access stratum (access stratum, AS) context information in the RRC inactive state. Compared with switching between the RRC idle state and the RRC connected state, switching between the RRC inactive state and the RRC connected state has lower signaling overheads and a shorter delay.

For example, as shown in FIG. 2, the RRC connected state and the RRC inactive state may be mutually switched, and the RRC connected state and the RRC idle state may be mutually switched. In other words, the RRC connected state may be switched to the RRC inactive state or the RRC idle state. For example, the RRC connected state may be switched to the RRC inactive state or the RRC idle state by releasing an RRC connection. Alternatively, the RRC inactive state or the RRC idle state is switched to the RRC connected state by setting up an RRC connection. In addition, the RRC inactive state may be further switched to the RRC idle state. For example, the RRC inactive state is switched to the RRC idle state by releasing the AS context information.

### 3. Carrier aggregation (carrier aggregation, CA):

In a wireless communication system, an uplink peak rate or a downlink peak rate of a terminal device is closely related to a communication bandwidth that can be obtained by the terminal device. A larger communication bandwidth that can be obtained by the terminal device indicates a higher uplink peak rate or a higher downlink peak rate of the terminal device. In a 5G NR system, a maximum bandwidth of a cell on a low frequency band can reach 100 megahertz (megahertz, MHz), and a maximum bandwidth of a cell on a high frequency band is 400 MHz.

However, a peak rate that a single cell can reach may not reach a peak rate in an enhanced mobile broadband (enhanced mobile broadband, eMBB) scenario. Therefore, to increase the peak rate of the terminal device to meet a requirement in the eMBB scenario, a solution idea is that communication bandwidths of a plurality of cells are aggregated and then provided for the terminal device. This is also an idea of the CA. The plurality of cells may include a primary cell (primary cell, PCell) and a secondary cell (secondary cell, SCell). The primary cell is a cell initially accessed by the terminal device, and is responsible for RRC communication with the terminal device. The secondary cell is a cell added for the terminal device during RRC reconfiguration, and is configured to provide an additional radio resource for the terminal device. In a CA scenario, a carrier corresponds to a cell. For example, that the terminal device accesses a carrier may be understood as that the terminal device accesses a cell. A communication bandwidth of a cell is a bandwidth of a carrier corresponding to the cell. A carrier of each aggregated cell in the CA may be referred to as a component carrier (component carrier, CC). After carriers of a plurality of cells are aggregated, the communication bandwidth that can be obtained by the terminal device may be a sum of bandwidths of the plurality of carriers, and the peak rate is increased.

### 4. Access barring (assess barring) check:

In an RRC inactive state or an RRC idle state, if a terminal device has a service requirement, the terminal device first needs to perform access barring check, that is, perform an access attempt. When the access attempt is allowed, the terminal device may send an access request to a radio access network device, to request to set up an RRC connection to the radio access network device. Further, after the RRC connection is set up, the terminal device may send uplink data to the radio access network device, to implement data transmission with the radio access network device. The access barring check refers to determining, based on an access identity (access identity, AI) and/or an access category (Access category, AC) of the terminal device and a unified access control (unified access control, UAC) parameter, whether to allow access of the terminal device (that is, whether the access attempt is allowed).

The AI is an identifier of the terminal device. For example, the AI may include content shown in the following Table 1.

**Table 1**

| AI | Configuration of a terminal device |
|---|---|
| 0 | The terminal device does not match any parameter in this table |
| 1 | Multimedia priority service (multimedia priority service, MPS) |
| 2 | Mission critical service (mission critical service, MCS) |
| 3 to 10 | Reserved |
| 11 | Public land mobile network (public land mobile network, PLMN) service |
| 12 | Security service |
| 13 | Public affairs |
| 14 | Emergency service |
| 15 | Operator staff |

For example, Table 1 shows a correspondence between a value of the AI of the terminal device and a configuration of the terminal device corresponding to the value of the AI. For example, if the value of the AI of the terminal device is 1, it indicates that the configuration of the terminal device includes the MPS, that is, the terminal device has the MPS; or if the value of the AI of the terminal device is 2, it indicates that the configuration of the terminal device includes the MCS, that is, the terminal device has the MCS.

The AC is a category of a service that is currently accessed by the terminal device. For example, the AC may include content shown in the following Table 2.

**Table 2**

| AC | Description |
|---|---|
| 0 | Mobile terminal (mobile terminal, MT) access: |
| | 1. Paging (paging) |
| | 2. Non-3GPP access notification |
| | 3. NR mobility management (mobility management, MM) procedure |
| 1 | Delay tolerant service |
| 2 | Emergency |
| 3 | Mobile originated (mobile originated, MO) signaling: |
| | 5G MM procedure initiated by a non-access stratum (non-access stratum, NAS) of a terminal device |
| 4 | MO multimedia telephony voice |
| 5 | MO multimedia telephony video |
| 6 | MO multimedia short message and MO internet protocol (Internet protocol, IP) short message |
| 7 | MO data: |
| | 1. 5G MM procedure initiated by the NAS of the terminal device |
| | 2. 5G MM NAS transport procedure initiated by the NAS of the terminal device |
| | 3. Uplink user plane packet data unit (packet data unit, PDU) session packet transmission |

For example, Table 2 shows a correspondence between a value of the AC of the terminal device and a service category indicated by the value. For example, if the value of the AC of the terminal device is 1, it indicates that a service currently accessed by the terminal device is a delay tolerant service type service; or if the value of the AC of the terminal device is 2, it indicates that a service currently accessed by the terminal device is an emergency type service.

The UAC parameter indicates whether an access attempt of the terminal device corresponding to the AI is allowed. The UAC parameter is carried in a system information block (system information block, SIB) 1. The UAC parameter includes a uac-BarringForAccessIndentity field. The uac-BarringForAccessIndentity field is represented by a bitmap, and each bit in the uac-BarringForAccessIndentity field corresponds to a value of the AI. For example, the value of the AI may be any one of 1, 2, 11, 12, 13, 14, and 15.

In an example, when the value of the AI of the terminal device is any one of 1, 2, 11, 12, 13, 14, and 15, if a bit corresponding to an AI is 0, it indicates that an access attempt of a corresponding terminal device is allowed when a value of the AI is 0; or if a bit corresponding to an AI is 1, it indicates that an access attempt of a corresponding terminal device is barred when a value of the AI is 1.

Alternatively, for a terminal device whose value of the AI is 1, if an RRC connection is set up by using at least one of MPS priority indication, redirection, and release results, and a value of a bit corresponding to the AI is 0, it indicates that an access attempt of the corresponding terminal device is allowed when the value of the AI is 1.

For a terminal device whose value of the AI is 3, the terminal device determines a uac-BarringFactorForAI3 field based on an AC of the terminal device, where the uac-BarringFactorForAI3 field is a field corresponding to the AC in the UAC parameter. An AS generates a random number (rand) that is greater than or equal to 0 and less than 1. If a value of the random number is less than a value of the field uac-BarringFactorForAI3, it indicates that an access attempt of a corresponding terminal device is allowed when the value of the AI is 3. If a value of the random number is greater than or equal to a value of the field uac-BarringFactorForAI3, it indicates that an access attempt of a corresponding terminal device is barred when the value of the AI is 3.

In this example, when the foregoing condition is not met, it is considered that the access attempt of the terminal device is barred.

In another example, for a terminal device whose value of an AI is any natural number in 1 to 15, the terminal device determines a uac-BarringFactor field based on an AC of the terminal device, and an AS generates a random number (rand) that is greater than or equal to 0 and less than 1. If a value of the random number is less than a value of the uac-BarringFactor field in the UAC parameter, it indicates that an access attempt of the terminal device corresponding to the AI is allowed. If a value of the random number is greater than or equal to a value of the uac-BarringFactor field, it indicates that an access attempt of the terminal device corresponding to the AI is barred.

### 5. Uncrewed aerial vehicle (uncrewed aerial vehicle, UAV) communication technology:

As a new type of aircraft, a UAV is popularized because of flexibility and convenience. In addition, a cellular network can provide the UAV with feature support such as wide coverage, high reliability, high security, and continuous mobility.

A system logical framework of the UAV is introduced into the 3GPP standard, to provide a communication service for the UAV. For example, the system logical framework includes content shown in FIG. 3. As shown in FIG. 3, the UAV may access a core network (for example, a 5GC) via a radio access network device, and an uncrewed aerial system service supplier (uncrewed aerial system service supplier, USS) (or a unified threat management (unified threat management, UTM) network element) may access the 5GC via a network exposure function (network exposure function, NEF) entity or an uncrewed aerial system network function (uncrewed aerial system network function, UAS-NF) network element deployed in the NEF entity. Therefore, in a process of serving the UAV, the USS may obtain, through the 5GC, a service required by the UAV, to support a UAV-related service. Services that can be obtained by the USS through the 5GC include but are not limited to positioning, authentication, and online status monitoring. For example, in a process of communication between the USS and the UAV, all intermediate network elements (such as a radio access network device, a 5GC, and a UAS-NF network element) participating in communication between the USS and the UAV may send information from the USS/UAV in a transparent transmission manner.

Optionally, an access and mobility management function (access and mobility management function, AMF) network element or a user plane function (user plane function, UPF) network element in a core network may obtain, via a radio access network device, a service required by the UAV, to indicate a UAV-related service. The AMF network element is mainly responsible for mobility management in a mobile network, for example, user location update, user registration with a network, and user handover. The UPF network element is mainly responsible for processing a user packet, for example, forwarding and charging. For example, the radio access network device may send, in a transparent transmission manner, information from the core network (such as an AMF network element or a UPF network element)/UAV.

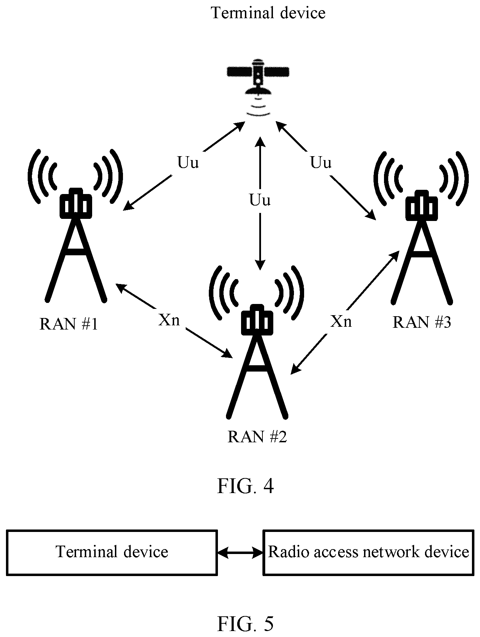

A communication environment of the UAV is greatly different from that of a conventional terminal device (for example, a mobile phone). The UAV is generally located above the radio access network device, and mainly performs communication through a line-of-sight (line-of-sight, LOS) path. Therefore, as shown in FIG. 4, compared with a conventional terminal device, the UAV can receive signals from more radio access network device. For example, the terminal device in FIG. 4 can receive signals from a radio access network device #1, a radio access network device #2, and a radio access network device #3. The UAV is connected to the radio access network device through a Uu interface. The radio access network devices are interconnected through an Xn interface, that is, the Xn interface supports signaling information exchange between two radio access network devices.

Because the UAV usually operates in the high air, and there is a high probability that the UAV communicates with the radio access network device (for example, a base station) through an LOS path, even if the UAV is far away from the radio access network device, a signal from the UAV can still be received. In other words, in addition to receiving a signal from a conventional terminal device, the radio access network device can further receive a signal from a remote UAV. This severely affects normal communication with the radio access network device, that is, causes severe interference to the radio access network device.

For the foregoing phenomenon, it is required in the European regulation that the UAV needs to comply with a no-transmit zone (no-transmit zone, NTZ) mechanism in a mobile/fixed communication network (mobile/fixed communication network, MFCN), that is, in the NTZ, the UAV is barred from performing uplink and/or downlink transmission on a specific frequency band. For example, the specific frequency band may be a frequency band that causes interference to the radio access network device. Alternatively, in the NTZ, the UAV is barred from performing uplink and/or downlink transmission. Therefore, interference of the UAV to a radio access network device near the UAV is reduced.

However, the current UAV technology does not involve the NTZ mechanism, that is, the NTZ mechanism cannot be implemented based on the current UAV technology. Therefore, how to implement the NTZ mechanism in the UAV technology is an urgent problem to be resolved currently.

Based on this, an embodiment of this application provides a communication method. In a first domain, a terminal device can choose to perform data transmission on a second frequency band other than a first frequency band, or does not perform data transmission (that is, maintains an RRC inactive state or an RRC idle state). Because no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

The technical solutions in embodiments of this application may be applied to various communication systems. The communication system may be a 3GPP communication system, for example, a 5G system such as an LTE system or an NR system, a satellite communication system, a non-terrestrial network (non-terrestrial network, NTN) system, an LTE and 5G hybrid networking system, a device-to-device (device-to-device, D2D) communication system, a machine-to-machine (machine-to-machine, M2M) communication system, an internet of things (Internet of Things, IoT) system, and a future evolved communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine-type communication (machine-type communication, MTC), massive machine-type communication (massive machine-type communication, mMTC), D2D, and IoT.

The communication system and the communication scenario applicable to this application are merely examples for description. The communication system and the communication scenario applicable to this application are not limited thereto. The communication system and the communication scenario provided in this application do not constitute any limitation on the solutions of this application. Unified descriptions are provided herein. Details are not described below again.

FIG. 5 shows an example communication system according to this application. The communication system includes at least one radio access network device and at least one terminal device.

Optionally, the radio access network device is a device that connects a terminal device to a wireless network, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a next generation base station in a 6G system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device for implementing a base station function in IoT, a device for implementing a base station function in V2X, a device for implementing a base station function in D2D, or a device for implementing a base station function in M2M. This is not specifically limited in this embodiment of this application.

For example, the base station in this embodiment of this application may include base stations in various forms, for example, a macro base station, a micro base station (also referred to as a small cell), an indoor base station, a relay station, an access point, and a donor node. This is not specifically limited in this embodiment of this application.

Optionally, during specific implementation, the radio access network device may be a module or a unit that completes some functions of the base station, for example, a central unit (central unit, CU), or the radio access network device may include a CU and a distributed unit (distributed unit, DU). The CU and the DU may be obtained through division based on protocol layers of a wireless network. For example, functions of an RRC protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a MAC layer, and a PHY layer are set in the DU.

It may be understood that division into processing functions of the CU and the DU based on the protocol layers is merely an example, or division may be performed in another manner. This is not specifically limited in this embodiment of this application.

In some embodiments, the CU may include a CU control plane (CU control plane, CU-CP) and a CU user plane (CU user plane, CU-UP).

Optionally, the terminal device may be a user side device having a wireless transceiver function, and may send a signal to the radio access network device, or receive a signal from the radio access network device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be widely applied to various scenarios, for example, may be a wireless terminal in IoT, D2D, M2M, MTC, a 5G network, or a future evolved PLMN. The terminal device may be deployed in the air (for example, on an airplane, a balloon, or a satellite).

For example, the terminal device may be an uncrewed aerial vehicle, a helicopter, a mechanical arm, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in smart home (smart home), a wireless device in a smart home (smart home control system, SCS), a wireless device in a smart office (office automation, OA), or an uncrewed aerial vehicle having an uncrewed aerial vehicle to uncrewed aerial vehicle (UAV to UAV, U2U) communication capability.

In embodiments of this application, the function of the radio access network device may alternatively be performed by a module (for example, a chip) in the radio access network device, or may alternatively be performed by a control subsystem including the function of the radio access network device. The control subsystem including the function of the radio access network device may be a control center in the foregoing application scenarios, such as the smart grid, the industrial control, the smart transportation, and the smart city. A function of the terminal device may also be performed by a module (for example, a chip or a modem) in the terminal device, or may be performed by an apparatus including a function of the terminal device.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

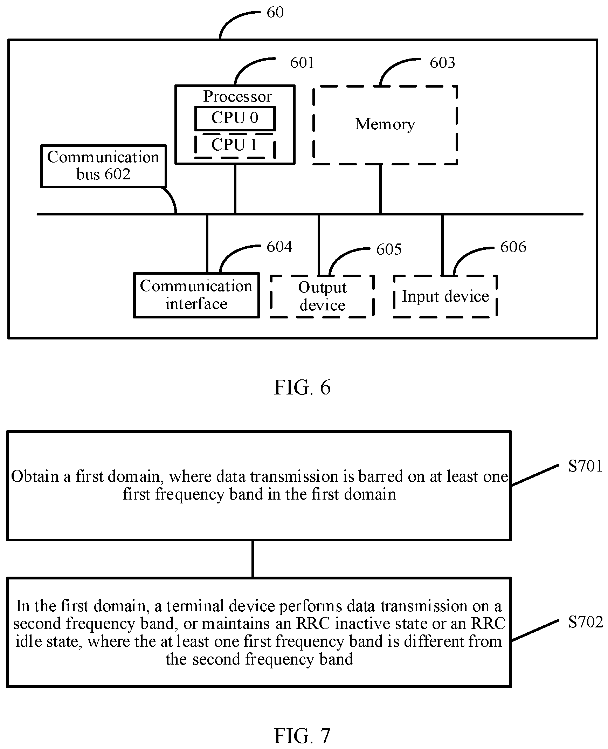

Optionally, related functions of the terminal device or the radio access network device in this application may be implemented through a communication apparatus 60 in FIG. 6. Refer to FIG. 6. The communication apparatus 60 includes one or more processors 601. Further, the communication apparatus 60 may further include a communication bus 602 and at least one communication interface (where FIG. 6 is merely an example, and an example in which the communication apparatus 60 includes a communication interface 604 and one processor 601 is used for description). Optionally, the communication apparatus 60 may further include a memory 603.

The processor 601 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 601 may include one or more CPUs, for example, a CPU 0 and a CPU 1 in FIG. 6.

The communication bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 6, but this does not mean that there is only one bus or only one type of bus. The communication bus 602 is configured to connect different components in the communication apparatus 60, so that the different components in the communication apparatus 60 may communicate and interact with each other.

The communication interface 604 may be a transceiver module configured to communicate with another device or a communication network. The communication network may be, for example, the Ethernet (Ethernet), a radio access network (radio access network, RAN), or a wireless local area network (wireless local area network, WLAN). For example, the communication interface 604 may be an apparatus such as a transceiver or a transceiver machine. Alternatively, the communication interface 604 may be a transceiver circuit located in the processor 601, and is configured to implement signal input and signal output of the processor.

The memory 603 may be an apparatus having a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be accessed by a computer and that can be configured to carry or store expected program code in a form of instructions or a data structure, but is not limited thereto. The memory may exist independently, and is connected to the processor through the communication bus 602. The memory may alternatively be integrated with the processor.

The memory 603 is configured to store computer-executable instructions for performing the solutions of this application, and the processor 601 controls execution. The processor 601 is configured to execute the computer-executable instructions stored in the memory 603, to implement the methods provided in embodiments of this application.

Alternatively, optionally, in embodiments of this application, the processor 601 may perform processing-related functions in methods provided in the following embodiments of this application, and the communication interface 604 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 60 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, or a projector (projector). The input device 606 communicates with the processor 601, and may receive an input from a user in a plurality of manners. For example, the input device 606 may be a mouse, a keyboard, a touchscreen device, a sensing device, or the like.

It should be noted that the composition structure shown in FIG. 6 does not constitute a limitation on the communication apparatus. In addition to the components shown in FIG. 6, the communication apparatus may include more or fewer components than those shown in the figure, or combine some components, or have different component arrangements.

The following describes, with reference to the accompanying drawings, the communication method provided in embodiments of this application. It may be understood that in embodiments of this application, the radio access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

FIG. 7 shows a communication method according to an embodiment of this application. The communication method includes the following steps.

S701: A terminal device obtains a first domain, where data transmission is barred on at least one first frequency band in the first domain; or data transmission is barred on at least one first frequency band in the first domain.

For example, that data transmission is barred on the at least one first frequency band in the first domain may also be understood as that uplink data transmission and/or downlink data transmission are/is barred on at least one frequency band in the first domain. Correspondingly, that data transmission is barred on the at least one first frequency band in the first domain may also be understood as that uplink data transmission and/or downlink data transmission are/is barred on the at least one first frequency band in the first domain.

In an example, when the at least one first frequency band is all frequency bands in frequency bands on which data transmission can be performed, that data transmission is barred on the at least one first frequency band in the first domain may also be understood as that data transmission cannot be performed on any frequency band in the first domain, that is, data transmission is barred in the first domain.

In another example, when the at least one first frequency band is some frequency bands in frequency bands on which data transmission can be performed, that data transmission is barred on the at least one first frequency band in the first domain may be understood as that data transmission cannot be performed only on the first frequency band in the first domain, that is, data transmission may be performed on a frequency band other than the first frequency band in the first domain.

Optionally, the first domain is a geographical area. For example, the first domain may be represented by using a longitude and latitude range and a height range. That is, the longitude and latitude range and the height range can form the first domain.

For example, the first domain may also be referred to as a first area, an NTZ, or the like. This is not limited in this application. For example, the terminal device may include a UAV.

For example, the terminal device may obtain the first domain in the following three manners:

In a possible implementation, the terminal device obtains the first domain from a core network or a third-party device.

Optionally, in this possible implementation, a UPF network element or an AMF network element in the core network may send the first domain to the terminal device. Correspondingly, the terminal device receives the first domain from the UPF network element or the AMF network element in the core network.

Optionally, in this possible implementation, the third-party device may include a USS network element/UTM network element. Therefore, the USS network element/UTM network element may send the first domain to the terminal device. Correspondingly, the terminal device receives the first domain from the USS network element/UTM network element.

For example, for an implementation in which the terminal device obtains the first domain from the core network or the third-party device, refer to related descriptions in FIG. 3. Details are not described herein again.

Optionally, in this possible implementation, the terminal device may further obtain, from the core network or the third-party device, a frequency band (for example, the at least one first frequency band) on which data transmission is barred in the first domain, or the terminal device may further obtain, from the core network or the third-party device, a frequency band (for example, one or more frequency bands in frequency bands other than the first frequency band) on which data transmission is allowed in the first domain. For ease of description, the frequency band on which data transmission is barred in the first domain and/or the frequency band on which data transmission is allowed in the first domain are collectively referred to as frequency band information below.

For example, the terminal device may further obtain, from the core network or the third-party device, the frequency band on which data transmission is barred in the first domain or the frequency band on which data transmission is allowed in the first domain. This is similar to the foregoing implementation in which the terminal device obtains the first domain from the core network or the third-party device. Details are not described herein again.

In another possible implementation, the terminal device obtains the first domain from the radio access network device.

Optionally, in this possible implementation, the radio access network device may obtain the first domain from the core network or the third-party device in advance, to send the first domain to the terminal device.

For example, for an implementation in which the radio access network device obtains the first domain from the core network or the third-party device, refer to related descriptions in FIG. 3. Details are not described herein again.

For example, the radio access network device sends the first indication information to the terminal device, and correspondingly, the terminal device receives the first indication information from the radio access network device, where the first indication information indicates or includes the first domain.

For example, the radio access network device is a serving radio access network device of the terminal device.

Optionally, in this possible implementation, the terminal device may further obtain frequency band information from the radio access network device. For example, the first indication information may further indicate frequency band information.

Optionally, in the foregoing two possible implementation solutions, the terminal device obtains the first domain before the terminal device enters the first domain, and further, the terminal device obtains the frequency band information before the terminal device enters the first domain.

For example, "before the terminal device enters the first domain" may also be understood as "when the terminal device is about to enter the first domain".

In still another possible implementation, the first domain is preconfigured for the terminal device. For example, the first domain may be predefined in a protocol. Further, the frequency band information may also be preconfigured. For example, the frequency band information may also be predefined in a protocol.

S702: In the first domain, the terminal device performs data transmission on the second frequency band, or maintains an RRC inactive state or an RRC idle state, where the at least one first frequency band is different from the second frequency band, in other words, the at least one first frequency band does not include the second frequency band.

For example, because the terminal device cannot perform data transmission in the RRC inactive state or the RRC idle state, that the terminal device maintains the RRC inactive state or the RRC idle state in the first domain may be understood as that the terminal device does not perform data transmission in the first domain.

According to the communication method provided in this embodiment of this application, in the first domain, the terminal device can choose to perform data transmission on the second frequency band other than the first frequency band, or does not perform data transmission (that is, maintains the RRC inactive state or the RRC idle state). Because no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

The foregoing is a general description of the communication method in embodiments of this application. The following describes in detail "performing data transmission on the second frequency band, or maintaining the RRC inactive state or the RRC idle state" in the foregoing embodiments.

Optionally, when the at least one first frequency band is a part of frequency bands on which data transmission can be performed, that is, data transmission cannot be performed only on the first frequency band in the first domain, before entering the first domain, the terminal device may determine, based on frequency band information obtained by the terminal device, whether a current status of the terminal device needs to be changed.

For example, the frequency band information includes a frequency band on which data transmission is barred in the first domain. In this case, the frequency band information includes the at least one first frequency band. The terminal device may determine whether a frequency band on which the terminal device performs data transmission at a current moment is the first frequency band. If the frequency band is the first frequency band, the terminal device needs to change a current status. If the frequency band is not the first frequency band, the terminal device does not need to change a current status.

Alternatively, the frequency band information includes a frequency band on which data transmission is allowed in the first domain. In this case, the frequency band information includes one or more frequency bands in frequency bands other than the first frequency band. The terminal device may determine that a frequency band on which the terminal device performs data transmission at a current moment is included in the frequency band information. If the frequency band is included in the frequency band information, the terminal device does not need to change a current status. If the frequency band is not included in the frequency band information, the terminal device needs to change a current status.

Optionally, when a frequency band on which data transmission is performed at a current moment does not belong to any one of the at least one first frequency band, that is, the terminal device does not need to change a current status, it may be considered that the frequency band on which data transmission is performed at the current moment is the second frequency band. Therefore, after entering the first domain, the terminal device can perform data transmission on the second frequency band.

The following describes in detail a case in which a frequency band on which data transmission is performed at a current moment belongs to one or more of the at least one first frequency band, that is, the terminal device needs to change a current status. In other words, before entering the first domain, the terminal device performs data transmission on one or more of the at least one first frequency band. Scenario 1: The terminal device communicates with a cell of a radio access network device, where the radio access network device is a serving radio access network device of the terminal device. The scenario 1 may also be considered as a scenario of a single CC.

Optionally, in the scenario 1, before the terminal device enters the first domain, the terminal device performs data transmission on one of the at least one first frequency band. In other words, before the terminal device enters the first domain, the radio access network device performs data transmission with the terminal device on the first frequency band.

In an example, before entering the first domain, the terminal device may determine, based on the frequency band information, whether the second frequency band exists, so that in the first domain, data transmission is performed on the second frequency band, or the RRC inactive state or the RRC idle state is maintained.

For example, when the at least one first frequency band included in the frequency band information is a part of frequency bands on which data transmission can be performed, it indicates that the second frequency band exists, and the terminal device may determine the second frequency band from one or more frequency bands in frequency bands other than the first frequency band. Alternatively, when the at least one first frequency band included in the frequency band information is all of frequency bands on which data transmission can be performed, it indicates that the second frequency band does not exist. Alternatively, when the frequency band information includes one or more frequency bands in frequency bands other than the first frequency band, it indicates that the second frequency band exists, and the terminal device may determine the second frequency band from the one or more frequency bands in the frequency bands other than the first frequency band.

Optionally, when the second frequency band does not exist, the terminal device may send, to the radio access network device, a request message for releasing an RRC connection. Therefore, the radio access network device sends, to the terminal device based on the request message, configuration information used to release the RRC connection, so that the terminal device can release the RRC connection, and further, maintain the RRC inactive state or the RRC idle state in the first domain.

Alternatively, when the second frequency band does not exist, the terminal device may release the RRC connection, to maintain the RRC inactive state or the RRC idle state in the first domain.

Optionally, when the second frequency band exists, the terminal device may send, to the radio access network device, a request message for switching to the second frequency band. Therefore, the radio access network device sends, to the terminal device based on the request message, configuration information used to switch to the second frequency band, so that the terminal device can switch to the second frequency band, and further, perform data transmission on the second frequency band in the first domain.

Alternatively, when the second frequency band exists, the terminal device switches to the second frequency band, to perform data transmission on the second frequency band in the first domain. Optionally, after switching to the second frequency band, the terminal device may send acknowledgment information to the radio access network device, to notify the radio access network device that the terminal device has completed handover.

In another example, in the first domain, the terminal device may perform data transmission on the second frequency band, or maintain the RRC inactive state or the RRC idle state based on an indication of the radio access network device.

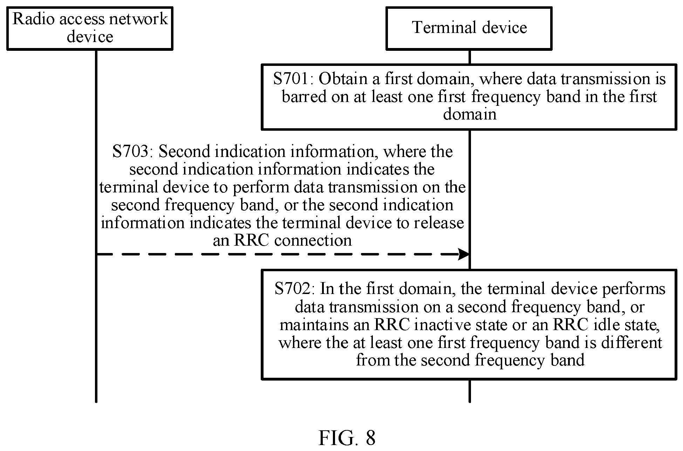

For example, before the terminal device enters the first domain, as shown in FIG. 8, the communication method further includes the following step S703:
S703: The radio access network device sends second indication information to the terminal device, and correspondingly, the terminal device receives the second indication information from the access network device, where the second indication information indicates the terminal device to perform data transmission on a second frequency band, or the second indication information indicates the terminal device to release the RRC connection, and the radio access network device is a serving radio access network device of the terminal device.

Case 1: The at least one first frequency band is a part of frequency bands on which data transmission can be performed, that is, data transmission cannot be performed only on the first frequency band in the first domain. In this case, the second indication information indicates the terminal device to perform data transmission on the second frequency band, or the second indication information indicates the terminal device to release the RRC connection.

For example, when the second indication information indicates the terminal device to release the RRC connection, the second indication information includes configuration information used to release the RRC connection; or when the second indication information indicates the terminal device to perform data transmission on the second frequency band, the second indication information includes configuration information used to switch to the second frequency band.

For example, the second indication information may be implemented in the following two possible implementations.

In a possible implementation, the second indication information is determined based on a first request message, where the first request message is used to request to perform data transmission on the second frequency band, or the first request message is used to request to release the RRC connection.

For example, when the first request message is used to request to perform data transmission on the second frequency band, the second indication information indicates the terminal device to perform data transmission on the second frequency band; or when the first request message is used to request to release the RRC connection, the second indication information indicates the terminal device to release the RRC connection.

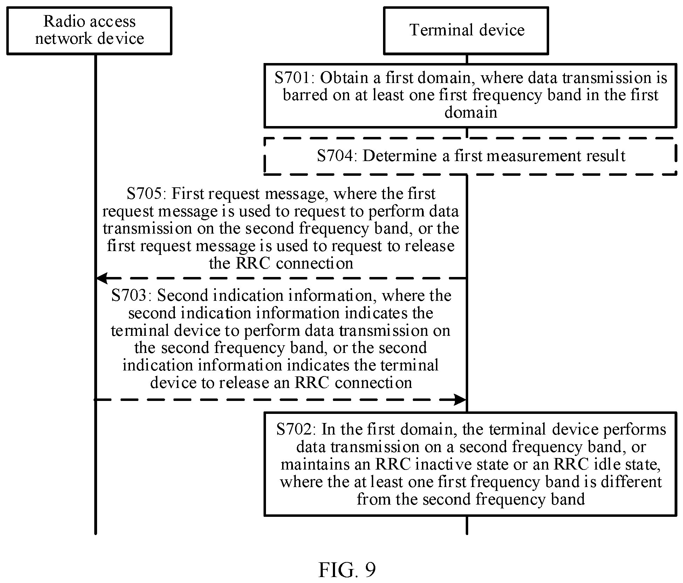

For example, as shown in FIG. 9, before step S703, the communication method may further include the following steps S704 and S705.

S704: The terminal device determines a first measurement result, where the first measurement result includes a measurement result corresponding to at least one frequency, and the first measurement result is a measurement result existing before the terminal device enters the first domain.

In an example, the terminal device may perform real-time measurement, and obtain a real-time measurement result, to determine the measurement result existing before the terminal device enters the first domain as the first measurement result.

For example, at a moment #1, the terminal device is located outside the first domain, and after the moment #1, the terminal device is located in the first domain. In this case, a measurement result at the moment #1 may be determined as the first measurement result. Alternatively, at a moment #1, a distance between the terminal device and the first domain is less than or equal to a preset distance threshold, and before the moment #1, the terminal device is closer to the first domain. In this case, it may be considered that the terminal device is about to enter the first domain, and a measurement result at the moment #1 may be determined as the first measurement result.

In another example, before the terminal device enters the first domain, the terminal device may perform measurement based on a measurement configuration from the radio access network device, to determine the first measurement result.

For example, before the terminal device enters the first domain, the terminal device may send, to the radio access network device, indication information indicating a location of a terminal device that is about to enter the first domain, or the terminal device sends, to the radio access network device, indication information indicating that the terminal device is about to enter the first domain. Therefore, the radio access network device sends the measurement configuration to the terminal device based on the indication information, so that the terminal device determines the first measurement result.

S705: The terminal device sends a first request message to the radio access network device, and correspondingly, the radio access device receives the first request message from the terminal device.

Optionally, the first request message is determined based on the first measurement result.

For example, the terminal device may determine whether the at least one frequency includes a frequency that does not belong to the first frequency band. For example, the frequency that does not belong to the first frequency band may be understood as a frequency in a frequency band other than the first frequency band. When the at least one frequency includes frequencies that do not belong to the first frequency band, a frequency band in which one or more of the frequencies that do not belong to the first frequency band are located is determined as the second frequency band. When the at least one frequency does not include a frequency that does not belong to the first frequency band, it may be considered that each of the at least one frequency is located in one or more of the at least one first frequency band.

In an example, when one or more of the at least one frequency are located in the second frequency band, the first request message is used to request to perform data transmission on the second frequency band.

Optionally, in this example, the first request message may be carried in an RRC reconfiguration message. In this case, the first request message may include the second frequency band.

Optionally, in this example, that the first request message is used to request to perform data transmission on the second frequency band includes: The first request message is used to request to switch to the second frequency band, and correspondingly, that the second indication information indicates the terminal device to perform data transmission on the second frequency band includes: The second indication information indicates the terminal device to switch to the second frequency band, to perform data transmission on the second frequency band.

In another example, when each of the at least one frequency is located in the at least one first frequency band, the first request message is used to request to release the RRC connection. In this example, the second indication information indicates the terminal device to release the RRC connection.

Optionally, in this example, that the first request message is used to request to release the RRC connection includes: The first request message is used to request to transition to the RRC inactive state or the RRC idle state. Correspondingly, that the second indication information indicates the terminal device to release the RRC connection includes: The second indication information indicates the terminal device to transition to the RRC inactive state or the RRC idle state. Therefore, the terminal device may transition from the RRC connected state to the RRC inactive state or the RRC idle state based on the second indication information, to release the RRC connection.

Optionally, in this example, the first request message may be located in an RRCReleaseRequest field in an RRC message, and the RRCReleaseRequest field indicates to release the RRC connection. In this case, the first request message may be represented by using one bit. For example, the one bit may be 1, or the one bit may be 0.

Based on this possible implementation, the terminal device senses the first domain, and actively requests RRC connection release or performs data transmission on the second frequency band (that is, the terminal device sends the first request message). Therefore, the radio access network device does not need to sense the first domain, and only needs to respond to the first request message (that is, the radio access network device sends the second indication information), thereby reducing a computation amount of the radio access network device.

In another possible implementation, the second indication information is determined based on a first measurement result. In this case, the radio access network device determines the second indication information based on the first measurement result.

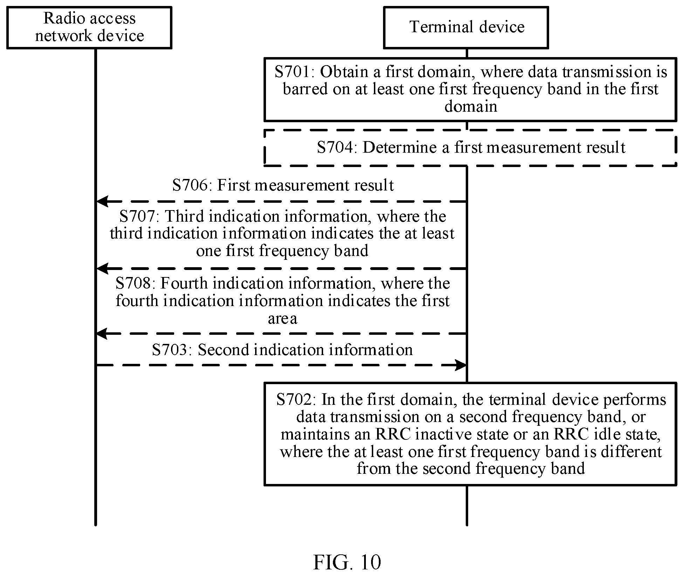

For example, as shown in FIG. 10, after step S704, the communication method may further include the following step S706:
S706: The terminal device sends the first measurement result to the radio access network device, and correspondingly, the radio access network device receives the first measurement result from the terminal device. Optionally, the radio access network device may determine the second indication information based on whether the at least one frequency includes a frequency that does not belong to the first frequency band.

For example, the radio access network device may determine whether the at least one frequency includes a frequency that does not belong to the first frequency band. When the at least one frequency includes frequencies that do not belong to the first frequency band, a frequency band in which one or more of the frequencies that do not belong to the first frequency band are located is determined as the second frequency band. When the at least one frequency does not include a frequency that does not belong to the first frequency band, it may be considered that each of the at least one frequency is located in one or more of the at least one first frequency band.

In an example, when one or more of the at least one frequency are located in the second frequency band, the second indication information indicates the terminal device to perform data transmission on the second frequency band.

Optionally, in this example, that the second indication information indicates the terminal device to perform data transmission on the second frequency band includes: The second indication information indicates the terminal device to switch to the second frequency band, to perform data transmission on the second frequency band.

In another example, when each of the at least one frequency is located in a first frequency band in the at least one first frequency band, the second indication information indicates the terminal device to release the RRC connection.

Optionally, that the second indication information indicates the terminal device to release the RRC connection includes: The second indication information indicates the terminal device to transition to the RRC inactive state or the RRC idle state. Therefore, the terminal device may transition from the RRC connected state to the RRC inactive state or the RRC idle state based on the second indication information, to release the RRC connection.

Optionally, in this possible implementation, the radio access network device may obtain frequency band information from a core network or a third-party device, or the frequency band information is preconfigured. Alternatively, the radio access network device may obtain the frequency band information from the terminal device. Therefore, the second indication information is determined based on the frequency band information and the first measurement result.

For example, an implementation in which the radio access network device obtains the frequency band information from the core network or the third-party device, or the frequency band information is preconfigured is similar to an implementation in which the terminal device obtains the frequency band information in step S701. For details, refer to related descriptions in step S701. The details are not described herein again.

For example, when the radio access network device obtains the frequency band information from the terminal device, as shown in FIG. 10, before step S703, the communication method may further include step S707:

S707: The terminal device sends third indication information to the radio access network device, and correspondingly, the radio access network device receives the second indication information from the terminal device, where the third indication information indicates the at least one first frequency band. Because the second indication information is determined based on the first measurement result and the at least one first frequency band, it may be considered that the third indication information is used to determine the second indication information.

For example, the third indication information may include the frequency band information. For example, the third indication information may include a frequency band on which data transmission is barred in the first domain, that is, the third indication information includes the at least one first frequency band. Alternatively, the third indication information may include a frequency band on which data transmission is allowed in the first domain, that is, the third indication information includes one or more frequency bands in frequency bands other than the first frequency band. In this case, the radio access network device may determine the frequency band on which data transmission is allowed in the first domain as the first frequency band. In other words, the third indication information implicitly indicates the at least one first frequency band.

Optionally, in this possible implementation, the radio access network device may obtain the first domain from a core network or a third-party device, or the first domain is preconfigured. Alternatively, the radio access network device may obtain the first domain from the terminal device. For example, for an implementation in which the radio access network device obtains the first domain from the core network or the third-party device, or the first domain is a preconfigured implementation is similar to an implementation in which the terminal device obtains the first domain in step S701. For details, refer to related descriptions in step S701. The details are not described herein again.

For example, when the radio access network device obtains the first domain from the terminal device, as shown in FIG. 10, before step S703, the communication method may further include step S708:
S708: The terminal device sends fourth indication information to the radio access network device, and correspondingly, the radio access network device receives the fourth indication information from the terminal device, where the fourth indication information indicates the first domain, and the fourth indication information is used to determine the second indication information.

Optionally, the fourth indication information may include the first domain, or the fourth indication information is indication information indicating only the first domain. For example, the third indication information and the fourth indication information may be located in same information, or may be located in different information.

According to this optional solution, after obtaining the first domain, the radio access network device may determine sending time of the second indication information based on the first domain. For example, the radio access network device may learn of a location of the terminal device in real time, to determine time before the terminal device enters the first domain. Therefore, before the terminal device enters the first domain, the terminal device sends the second indication information, so that the terminal device can perform data transmission on the second frequency band in the first domain, or maintain the RRC inactive state or the RRC idle state.

It should be noted that an execution sequence between step S706 and steps S707 and S708 is not limited. For example, steps S707 and S708 may be performed before step S706; steps S707 and S708 may be performed after step S706; or steps S707 and S708 may be performed simultaneously with step S706.

Based on this possible implementation, the radio access network device senses the first domain, and indicates the terminal device to release the RRC connection or perform data transmission on the second frequency band (that is, send the second indication information to the terminal device), thereby reducing a processing computation amount of the terminal device, and saving computing power for the terminal device.

Case 2: The at least one first frequency band is all of frequency bands on which data transmission can be performed, that is, data transmission cannot be performed on any frequency band in the first domain. In this case, the second indication information indicates the terminal device to release the RRC connection.

In an example, the second indication information is determined based on a first request message, and the first request message is used to request to release the RRC connection.

Optionally, before entering the first domain, the terminal device may send the first request message to the radio access network device. Therefore, the radio access network device can determine the second indication information based on the first request message.

For example, the first request message may be located in an RRCReleaseRequest field in an RRC message, and the RRCReleaseRequest field indicates to release the RRC connection. In this case, the first request message may be represented by using one bit. For example, the one bit may be 1, or the one bit may be 0.

Based on this example, the terminal device senses the first domain, and actively requests RRC connection release, so that the radio access network device does not need to sense the first domain, and only needs to respond to an RRC connection release request, thereby reducing an operation amount of the radio access network device.

In another example, the second indication information is determined based on indication information indicating a location of the terminal device, or the second indication information is determined based on indication information indicating that the terminal device is about to enter the first domain. For ease of description, the indication information indicating the location of the terminal device that is about to enter the first domain and the indication information indicating that the terminal device is about to enter the first domain are collectively referred to as first location indication information below.

Optionally, the radio access network device may determine, based on the first domain and the location of the terminal device that is about to enter the first domain, whether the terminal device is about to enter the first domain. Therefore, when the terminal device is about to enter the first domain, the second indication information is sent to the terminal device. Alternatively, the radio access network device sends the second indication information to the terminal device based on triggering of the indication information indicating that the terminal device is about to enter the first domain.

For example, the radio access network device may obtain the first location indication information from the terminal device, that is, the terminal device directly sends the first location indication information to the radio access network device. Alternatively, the radio access network device may obtain the first location indication information from the core network, that is, the terminal device sends the first location indication information to the core network, and the core network sends the first location indication information to the radio access network device. For example, the terminal device may send the first location indication information to a location management function (location management function, LMF) network element in the core network, so that the LMF network element sends the first location indication information to the radio access network device.

Scenario 2: The terminal device communicates with a plurality of cells whose quantity is greater than or equal to 2. The plurality of radio access network devices include a serving radio access network device of the terminal device. Therefore, a cell of the serving radio access network device may be referred to as a primary cell, and a cell in the plurality of cells other than the primary cell may be referred to as a secondary cell. The scenario 2 may also be considered as a CA scenario. For ease of description, the following uses an example in which the terminal device communicates with cells of two radio access network devices for description.

Optionally, in the scenario 2, the terminal device may perform data transmission on the second frequency band in the first domain based on an indication of the second indication information, where the second indication information indicates to perform data transmission on the second frequency band.

For example, the second indication information is determined by the radio access device and sent to the terminal device. For example, in the scenario 2, the second indication information may be implemented in the following two possible implementations.

In a possible implementation, the second indication information is determined based on a first request message, and the first request message is used to request to perform data transmission on the second frequency band.

For example, the first request message may be carried in an RRC reconfiguration message. In this case, the first request message may include the second frequency band.

Optionally, in this example, that the first request message is used to request to perform data transmission on the second frequency band includes: The first request message is used to request to switch to the second frequency band, and correspondingly, that the second indication information indicates the terminal device to perform data transmission on the second frequency band includes: The second indication information indicates the terminal device to switch to the second frequency band, to perform data transmission on the second frequency band.

In an example, a frequency of the primary cell is located in the first frequency band, and a frequency of the secondary cell is located in another frequency band that does not belong to any one of the at least one first frequency band.

Optionally, in this example, the terminal device may determine another frequency band that does not belong to any one of the at least one first frequency band as the second frequency band. In this case, it may be considered that the frequency of the secondary cell is located in the second frequency band.

Optionally, in this example, that the first request message is used to request to perform data transmission on the second frequency band includes: The first request message is used to request to perform data transmission in the secondary cell. Correspondingly, in this case, that the second indication information indicates the terminal device to perform data transmission on the second frequency band includes: The second indication information indicates the terminal device to perform data transmission in the secondary cell.

For example, that the first request message is used to request to perform data transmission in the secondary cell includes: The first request message is used to request to perform data transmission only in the secondary cell, and correspondingly, that the second indication information indicates the terminal device to perform data transmission in the secondary cell includes: The second indication information indicates the terminal device to perform data transmission only in the secondary cell.

Alternatively, that the first request message is used to request to perform data transmission in the secondary cell includes: The first request message is used to request to change the secondary cell to the primary cell. Correspondingly, that the second indication information indicates the terminal device to perform data transmission in the secondary cell includes: The second indication information indicates the terminal device to change the secondary cell to the primary cell. Therefore, based on the second indication information, the terminal device may change the secondary cell to the primary cell, and perform data transmission in the changed primary cell, to implement transmission on the second frequency band.

Alternatively, that the first request message is used to request to perform data transmission in the secondary cell includes: The first request message is used to request to suspend data transmission in the primary cell, and correspondingly, that the second indication information indicates the terminal device to perform data transmission in the secondary cell includes: The second indication information indicates the terminal device to suspend data transmission in the primary cell. Therefore, based on the second indication information, the terminal device can suspend data transmission in the primary cell, and further, can continue data transmission in the secondary cell.

In another example, a frequency of the primary cell is located in another frequency band that does not belong to any one of the at least one first frequency band, and a frequency of the secondary cell is located in the first frequency band.

Optionally, in this example, the terminal device may determine another frequency band that does not belong to any one of the at least one first frequency band as the second frequency band. In this case, it may be considered that the frequency of the primary cell is located in the second frequency band.

Optionally, in this example, that the first request message is used to request to perform data transmission on the second frequency band includes: The first request message is used to request to perform data transmission in the primary cell. Correspondingly, in this case, that the second indication information indicates the terminal device to perform data transmission on the second frequency band includes: The second indication information indicates the terminal device to perform data transmission in the primary cell.

For example, that the first request message is used to request to perform data transmission in the primary cell includes: The first request message is used to request to perform data transmission only in the primary cell, and correspondingly, that the second indication information indicates the terminal device to perform data transmission in the primary cell includes: The second indication information indicates the terminal device to perform data transmission only in the primary cell. Therefore, based on the second indication information, the terminal device can suspend data transmission in the secondary cell, and further, can continue data transmission in the primary cell.

Alternatively, that the first request message is used to request to perform data transmission in the primary cell includes: The first request message is used to request to delete or deactivate the secondary cell, and correspondingly, that the second indication information indicates the terminal device to perform data transmission in the primary cell includes: The second indication information indicates the terminal device to delete or deactivate the secondary cell. Therefore, the terminal device can delete the secondary cell or deactivate the secondary cell based on the second indication information, so that data transmission cannot be performed in the secondary cell, to implement data transmission on the second frequency band.

In another possible implementation, the second indication information is determined based on the first location indication information. For example, for an implementation of the first location indication information, refer to related descriptions of the first location indication information in the foregoing scenario 1. Details are not described herein again.

Optionally, the radio access network device may determine, based on the location of the terminal device and the first domain, whether the terminal device is about to enter the first domain. Therefore, when the terminal device is about to enter the first domain, the second indication information is sent to the terminal device. Alternatively, the radio access network device sends the second indication information to the terminal device based on triggering of the indication information indicating that the terminal device is about to enter the first domain.

In an example, a frequency of the primary cell is located in the first frequency band, and a frequency of the secondary cell is located in another frequency band that does not belong to any one of the at least one first frequency band.

Optionally, in this example, the terminal device may determine another frequency band that does not belong to any one of the at least one first frequency band as the second frequency band. In this case, it may be considered that the frequency of the secondary cell is located in the second frequency band.

Optionally, in this example, that the second indication information indicates the terminal device to perform data transmission on the second frequency band includes: The second indication information indicates the terminal device to perform data transmission in the secondary cell.

For example, that the second indication information indicates the terminal device to perform data transmission in the secondary cell includes: The second indication information indicates the terminal device to perform data transmission only in the secondary cell. Therefore, based on the second indication information, the terminal device can suspend data transmission in the primary cell, and further, can continue data transmission in the secondary cell.

Alternatively, the second indication information indicates the terminal device to change the secondary cell to the primary cell. Therefore, based on the second indication information, the terminal device may change the secondary cell to the primary cell, and perform data transmission in the changed primary cell, to implement transmission on the second frequency band.

In another example, a frequency of the primary cell is located in another frequency band that does not belong to any one of the at least one first frequency band, and a frequency of the secondary cell is located in the first frequency band.

Optionally, in this example, the terminal device may determine another frequency band that does not belong to any one of the at least one first frequency band as the second frequency band. In this case, it may be considered that the frequency of the primary cell is located in the second frequency band.

Optionally, in this example, that the second indication information indicates the terminal device to perform data transmission on the second frequency band includes: The second indication information indicates the terminal device to perform data transmission in the primary cell.

For example, that the second indication information indicates the terminal device to perform data transmission in the primary cell includes: The second indication information indicates the terminal device to perform data transmission only in the primary cell. Therefore, the terminal device can delete the secondary cell or deactivate the secondary cell based on the second indication information, so that data transmission cannot be performed in the secondary cell, to implement data transmission in the second frequency band. Alternatively, the second indication information indicates the terminal device to delete or deactivate the secondary cell. Alternatively, the second indication information indicates the terminal device to suspend data transmission in the secondary cell. Therefore, based on the second indication information, the terminal device can suspend data transmission in the secondary cell, and further, can continue data transmission in the primary cell.

It should be noted that the foregoing scenario 2 describes only an example of a case in which the terminal device communicates with the cells of the two radio access network devices. A case in which the terminal device communicates with cells of more than two radio access network devices is similar to the case in which the terminal device communicates with the cells of the two radio access network devices. For details, refer to an implementation in which the terminal device communicates with the cells of the two radio access network devices. The details are not described herein again.

The foregoing describes an operation performed by the terminal device and/or the radio access network device before the terminal device enters the first domain. The following describes in detail an operation performed by the terminal device and/or the radio access network device after the terminal device leaves the first domain.

For example, "after the terminal device leaves the first domain" may be understood that the terminal device is located outside the first domain at a current moment, and the terminal device is located in the first domain at a moment before the current moment.

For example, after the terminal device leaves the first domain, an operation performed by the terminal device and/or the radio access network device may be implemented in the following three manners.

Manner 1: In the first domain, when the terminal device performs data transmission on the second frequency band, after leaving the first domain, the terminal device may send a second measurement result, and the radio access network device performs further processing, where the second measurement result is a measurement result obtained after the terminal device leaves the first domain.

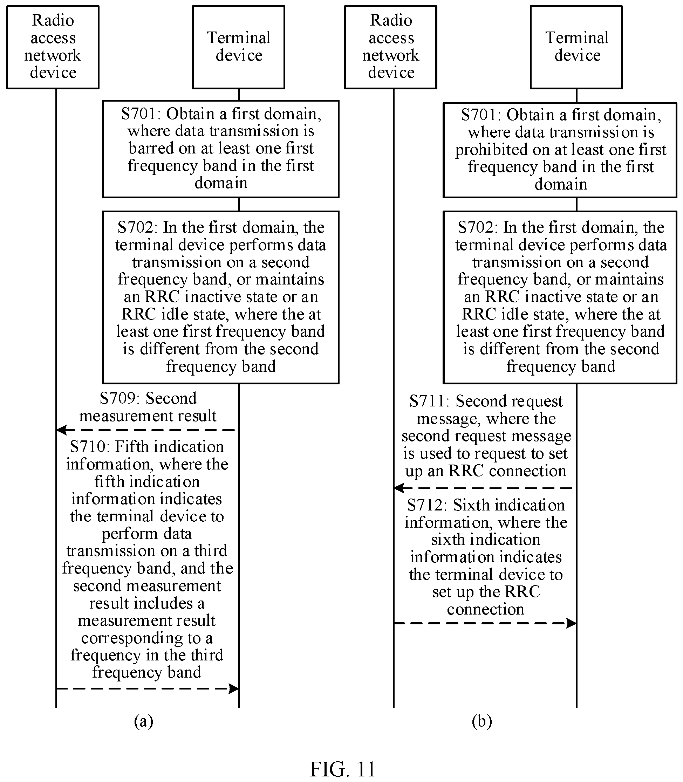

For example, after step S702, as shown in (a) in FIG. 11, the communication method may further include the following step S709:
S709: The terminal device sends the second measurement result to the radio access network device, and correspondingly, the radio access network device receives the second measurement result from the terminal device.

In an example, the terminal device may perform real-time measurement, and obtain a real-time measurement result, to determine the measurement result obtained after the terminal device leaves the first domain as the second measurement result.

For example, at a moment #2, the terminal device is located outside the first domain, and before the moment #2, the terminal device is located in the first domain. In this case, a measurement result at the moment #2 may be determined as the second measurement result. Alternatively, at a moment #2, a distance between the terminal device and a first domain is greater than or equal to a preset distance threshold, and before the moment #2, the terminal device is increasingly away from the first domain. In this case, it may be considered that the terminal device has left the first domain, and a measurement result at the moment #2 may be determined as the second measurement result.

In another example, after the terminal device leaves the first domain, the terminal device may perform measurement based on a measurement configuration from the radio access network device, to determine the second measurement result.

For example, after the terminal device leaves the first domain, the terminal device may send, to the radio access network device, indication information indicating a location of the terminal device, or the terminal device sends, to the radio access network device, indication information indicating that the terminal device has left the first domain. Therefore, the radio access network device sends the measurement configuration to the terminal device based on the indication information, so that the terminal device determines the second measurement result.

Optionally, the radio access network device may determine, based on the second measurement result, whether the second measurement result meets a handover condition. When the second measurement result meets the handover condition, the radio access network device may send, to the terminal device, configuration information used for handover, so that the terminal device can perform handover based on the configuration information. When the second measurement result does not meet the handover condition, the radio access network device does not need to send the configuration information used for handover. In this case, the terminal device still performs data transmission on the second frequency band.

For example, when the second measurement result meets the handover condition, as shown in (a) in FIG. 11, after step S709, the communication method may further include the following step S710:
S710: The radio access network device sends fifth indication information to the terminal device, and correspondingly, the terminal device receives the fifth indication information from the radio access network device, where the fifth indication information indicates the terminal device to perform data transmission on a third frequency band, and the second measurement result includes a measurement result corresponding to a frequency in the third frequency band.

For example, that the fifth indication information indicates the terminal device to perform data transmission on the third frequency band includes: The fifth indication information indicates the terminal device to switch to the third frequency band. For example, the fifth indication information includes configuration information used to switch to the third frequency band.

Optionally, the third frequency band may be one of the at least one first frequency band, or the third frequency band is one of frequency bands in frequency bands in which at least one frequency of the second measurement result is located other than the at least one first frequency band and the second frequency band.

Manner 2: In the first domain, when the terminal device maintains the RRC inactive state or the RRC idle state, after leaving the first domain, the terminal device may set up an RRC connection.

In an example, the terminal device may request the radio access network device to set up the RRC connection.

For example, after step S702, as shown in (b) in FIG. 11, the communication method may further include the following steps.

S711: The terminal device sends a second request message to the radio access network device, and correspondingly, the radio access network device receives the second request message from the terminal device, where the second request information is used to request to set up the RRC connection.

S712: The radio access network device sends sixth indication information to the terminal device, and correspondingly, the terminal device receives the sixth indication information from the radio access network device, where the sixth indication information indicates the terminal device to set up the RRC connection.

In another example, after setting up the RRC connection, the terminal device may send an acknowledgment message to the radio access network device, to indicate that the terminal device has set up the RCC connection.

Manner 3: After leaving the first domain, the terminal device may send second location indication information to the radio access network device, where the second location indication information indicates a location of the terminal device after the terminal device leaves the first domain, or the second location indication information indicates that the terminal device has left the first domain.

Optionally, in the solution 3, the radio access network device may determine, based on the second location indication information, that the terminal device has left the first domain in this case, so that a further operation can be performed based on a current state of the terminal device.

For example, in the first domain, when the terminal device performs data transmission on the second frequency band, the radio access network device may send, to the terminal device, indication information indicating the terminal device to send a fourth measurement result. In the first domain, when the terminal device is in the RRC inactive state or the RRC idle state, the radio access network device may send, to the terminal device, configuration information used to set up the RRC connection.

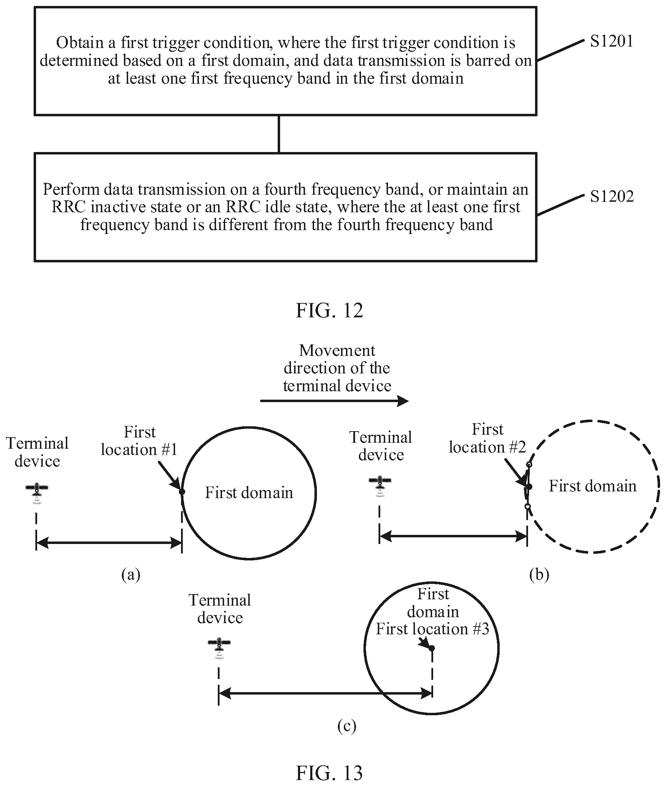

In addition to the foregoing communication method, an embodiment of this application further provides a communication method. FIG. 12 is a flowchart of another communication method according to an embodiment of this application. The communication method may include the following steps.

S1201: A terminal device obtains a first trigger condition, where the first trigger condition is determined based on a first domain, and data transmission is barred on at least one first frequency band in the first domain.

For example, that data transmission is barred on the at least one first frequency band in the first domain may also be understood as that uplink data transmission and/or downlink data transmission are/is barred on at least one frequency band in the first domain. Correspondingly, that data transmission is barred on the at least one first frequency band in the first domain may also be understood as that uplink data transmission and/or downlink data transmission are/is barred on the at least one first frequency band in the first domain.

In an example, when the at least one first frequency band is all frequency bands in frequency bands on which data transmission can be performed, that data transmission is barred on the at least one first frequency band in the first domain may also be understood as that data transmission cannot be performed on any frequency band in the first domain, that is, data transmission is barred in the first domain.

In another example, when the at least one first frequency band is some frequency bands in frequency bands on which data transmission can be performed, that data transmission is barred on the at least one first frequency band in the first domain may be understood as that data transmission cannot be performed only on the first frequency band in the first domain, that is, data transmission may be performed on a frequency band other than the first frequency band in the first domain.

Optionally, the first domain is a geographical area. For example, the first domain may be represented by using a longitude and latitude range and a height range. That is, the longitude and latitude range and the height range can form the first domain.

For example, the first domain may also be referred to as a first area, an NTZ, or the like. This is not limited in this application. For example, the terminal device may include a UAV.

In an example, that the terminal device obtains the first trigger condition includes: The terminal device determines the first trigger condition.

Optionally, in this example, the terminal device first obtains the first domain, and then determines the first trigger condition based on the first domain. For example, the terminal device may obtain the first domain from a core network or a third-party device; the terminal device obtains the first domain from a radio access network device; or the first domain is preconfigured for the terminal device. For example, the first domain may be predefined in a protocol. For an implementation in which the terminal device obtains the first domain, refer to related descriptions in step S701. Details are not described herein again.

For example, that the terminal device obtains the first domain includes: The radio access network device sends ninth indication information to the terminal device, and correspondingly, the terminal device receives the ninth indication information from the radio access network device, where the ninth indication information indicates the first domain. In other words, the ninth indication information is used to determine the first trigger condition. For example, an implementation of the ninth indication information is similar to an implementation of the fourth indication information. For details, refer to related descriptions of the fourth indication information. The details are not described herein again.

Optionally, in this example, the terminal device may further obtain frequency band information. For example, an implementation in which the terminal device obtains the frequency band information is similar to an implementation in which the terminal device obtains the first domain in the foregoing embodiment. For example, the frequency band information is a general term of a frequency band on which data transmission is barred in the first domain and a frequency band on which data transmission is allowed in the first domain.

For example, the terminal device obtains the frequency band information from the radio access network device. That the terminal device obtains the frequency band information includes: The radio access network device sends tenth indication information to the terminal device, and correspondingly, the terminal device receives the tenth indication information from the radio access network device, where the tenth indication information indicates the at least one first frequency band. In other words, the tenth indication information is used to determine the first trigger condition. For example, an implementation of the tenth indication information is similar to an implementation of the third indication information. For details, refer to related descriptions of the third indication information. The details are not described herein again.

In another example, that the terminal device obtains the first trigger condition includes: The terminal device receives the first trigger condition from the radio access network device. In other words, the first trigger condition is determined by the radio access network device based on the first domain.

Optionally, in this example, the radio access network device first obtains the first domain, and then determines the first trigger condition based on the first domain. For example, the radio access network device may obtain the first domain from a core network or a third-party device; the radio access network device obtains the first domain from the terminal device; or the first domain is preconfigured for the terminal device. For example, the first domain may be predefined in a protocol. For an implementation in which the radio access network device obtains the first domain, refer to related descriptions in FIG. 10. Details are not described herein again.

Optionally, in this example, the radio access network device may further obtain the frequency band information. For example, an implementation in which the radio access network device obtains the frequency band information is similar to an implementation in which the radio access network device obtains the first domain in the foregoing embodiment. Details are not described herein again.

When the first trigger condition is met, step S1202 may be performed.

S1202: The terminal device performs data transmission on a fourth frequency band, or maintains the RRC inactive state or the RRC idle state, where the at least one first frequency band is different from the fourth frequency band, or the at least one first frequency band does not include the fourth frequency band.

Optionally, when the first trigger condition is met, it indicates that the terminal device is at a moment before entering the first domain (or the terminal device has not entered the first domain). For example, when the first trigger condition is met, it may indicate that the terminal device is about to enter the first domain at a current moment.

According to the communication method provided in this embodiment of this application, because the first trigger condition is determined based on the first domain, and data transmission is barred on the at least one first frequency band in the first domain, the first trigger condition may be flexibly set. For example, the first trigger condition may be determined based on a distance between the first domain and the terminal device. For example, the terminal device being about to enter the first domain may be used as a condition for meeting the first trigger condition, so that when entering the first domain, the terminal device can perform data transmission on the fourth frequency band, or maintain the RRC inactive state or the RRC idle state, where the at least one first frequency band is different from the fourth frequency band. Therefore, in the first domain, the terminal device can maintain data transmission on the fourth frequency band, or maintain the RRC inactive state or the RRC idle state. Because the RRC inactive state or the RRC idle state is maintained in the first domain, that is, no data transmission is performed in the first domain, interference to a radio access network device near the terminal device can be reduced in the first domain. In addition, the at least one first frequency band is a frequency band on which data transmission is barred in the first domain. Based on this, a frequency band that causes interference to the radio access network device in the first domain may be configured as the first frequency band. Therefore, in the first domain, the terminal device can choose to perform data transmission on the second frequency band other than the first frequency band, to reduce interference to the radio access network device.

The foregoing is a general description of the communication method in embodiments of this application. The following describes in detail "when the first trigger condition is met, the terminal device performs data transmission on the fourth frequency band, or maintains the RRC inactive state or the RRC idle state" in the foregoing embodiments.

Optionally, when the at least one first frequency band is a part of frequency bands on which data transmission can be performed, that is, data transmission cannot be performed only on the first frequency band in the first domain, before the first trigger condition is met (that is, when the first trigger condition is not met), the terminal device may determine, based on frequency band information obtained by the terminal device, whether a current status of the terminal device needs to be changed.

For example, the frequency band information includes a frequency band on which data transmission is barred in the first domain. In this case, the frequency band information includes the at least one first frequency band. The terminal device may determine whether a frequency band on which the terminal device performs data transmission at a current moment is the first frequency band. If the frequency band is the first frequency band, the terminal device needs to change a current status. If the frequency band is not the first frequency band, the terminal device does not need to change a current status.

Alternatively, the frequency band information includes a frequency band on which data transmission is allowed in the first domain. In this case, the frequency band information includes one or more frequency bands in frequency bands other than the first frequency band. The terminal device may determine that a frequency band on which the terminal device performs data transmission at a current moment is included in the frequency band information. If the frequency band is included in the frequency band information, the terminal device does not need to change a current status. If the frequency band is not included in the frequency band information, the terminal device needs to change a current status.

Optionally, when a frequency band on which data transmission is performed at a current moment does not belong to any one of the at least one first frequency band, that is, the terminal device does not need to change a current status, it may be considered that the frequency band on which data transmission is performed at the current moment is the fourth frequency band. Therefore, when the first trigger condition is met, the terminal device can perform data transmission on the fourth frequency band.

The following describes in detail a case in which the frequency band on which data transmission is performed at the current moment belongs to one or more of the at least one first frequency band, that is, the terminal device needs to change a current status. In other words, before the first trigger condition is met (that is, when the first trigger condition is not met), the terminal device performs data transmission on one or more of the at least one first frequency band.

Scenario 1: The terminal device communicates with a cell of a radio access network device, where the radio access network device is a serving radio access network device of the terminal device. The scenario 1 may also be considered as a scenario of a single CC.

For example, in the scenario 1, "when the first trigger condition is met, the terminal device performs data transmission on the fourth frequency band, or maintains the RRC inactive state or the RRC idle state" may be implemented in the following two possible implementations.

In an example, when the first trigger condition is met, the terminal device may determine, based on the frequency band information, whether the fourth frequency band exists, so that when the first trigger condition is met, data transmission is performed on the fourth frequency band, or the RRC inactive state or the RRC idle state is maintained.

For example, when the at least one first frequency band included in the frequency band information is a part of frequency bands on which data transmission can be performed, it indicates that the fourth frequency band exists, and the terminal device may determine the fourth frequency band from one or more frequency bands in frequency bands other than the first frequency band. Alternatively, when the at least one first frequency band included in the frequency band information is all of frequency bands on which data transmission can be performed, it indicates that the fourth frequency band does not exist. Alternatively, when the frequency band information includes one or more frequency bands in frequency bands other than the first frequency band, it indicates that the fourth frequency band exists, and the terminal device may determine the fourth frequency band from the one or more frequency bands in the frequency bands other than the first frequency band.

Optionally, when the fourth frequency band does not exist, the terminal device may send, to the radio access network device, a request message for releasing an RRC connection. Therefore, the radio access network device sends, to the terminal device based on the request message, configuration information used to release the RRC connection, so that the terminal device can release the RRC connection, and further, maintain the RRC inactive state or the RRC idle state when the first trigger condition is met.

Alternatively, when the fourth frequency band does not exist, the terminal device may release the RRC connection, to maintain the RRC inactive state or the RRC idle state.

Optionally, when the fourth frequency band exists, the terminal device may send, to the radio access network device, a request message for switching to the fourth frequency band. Therefore, the radio access network device sends, to the terminal device based on the request message, configuration information used to switch to the fourth frequency band, so that the terminal device can switch to the fourth frequency band, and further, perform data transmission on the fourth frequency band when the first trigger condition is met.

Alternatively, when the fourth frequency band exists, the terminal device switches to the fourth frequency band, to perform data transmission on the fourth frequency band. Optionally, after switching to the fourth frequency band, the terminal device may send acknowledgment information to the radio access network device, to notify the radio access network device that the terminal device has completed handover.

In another example, when the first trigger condition is met, the terminal device may perform data transmission on the second frequency band, or maintain the RRC inactive state or the RRC idle state based on an indication of the radio access network device.

Optionally, when the first trigger condition is met, the terminal device performs data transmission on the fourth frequency band, or maintains the RRC inactive state or the RRC idle state based on an indication of the seventh indication information, where the seventh indication information indicates the terminal device to perform data transmission on the fourth frequency band, or the seventh indication information indicates the terminal device to release the RRC connection.

For example, before step S1202, the communication method may include the following steps S1203 and S1204.

S1203: The terminal device sends a third measurement result to the radio access network device, and correspondingly, the radio access network device receives the third measurement result from the terminal device, where the third measurement result includes a measurement result corresponding to at least one frequency, and one or more of the at least one frequency are located in the fourth frequency band.

In an example, the terminal device may perform real-time measurement, and obtain a real-time measurement result, to determine a measurement result obtained when the first trigger condition is met as the third measurement result. For example, the first trigger condition is met at a moment #5, and a measurement result at the moment #5 may be determined as the third measurement result.

In another example, when the first trigger condition is met, the terminal device may perform measurement based on a measurement configuration from the radio access network device, to determine the second measurement result.

For example, when the first trigger condition is met, the terminal device may send, to the radio access network device, indication information indicating that the first trigger condition is met. Therefore, the radio access network device sends the measurement configuration to the terminal device based on the indication information indicating that the first trigger condition is met, so that the terminal device determines the third measurement result. Alternatively, when the first trigger condition is met, it indicates that the terminal device is about to enter the domain. Therefore, when the first trigger condition is met, the terminal device may send location indication information to the radio access network device. Therefore, the radio access network device sends the measurement configuration to the terminal device based on the location indication information, so that the terminal device determines the third measurement result.

For example, for an implementation of the location indication information, refer to related descriptions of the location indication information in the foregoing embodiment. Details are not described herein again.

S1204: The radio access network device sends the seventh indication information to the terminal, and correspondingly, the terminal device receives the seventh indication information from the radio access network device.

Case 1: The at least one first frequency band is a part of frequency bands on which data transmission can be performed, that is, data transmission cannot be performed only on the first frequency band when the first trigger condition is met. In this case, the seventh indication information indicates the terminal device to perform data transmission on the fourth frequency band, or the seventh indication information indicates the terminal device to release the RRC connection.

For example, when the seventh indication information indicates the terminal device to release the RRC connection, the seventh indication information includes configuration information used to release the RRC connection; or when the seventh indication information indicates the terminal device to perform data transmission on the fourth frequency band, the seventh indication information includes configuration information used to switch to the fourth frequency band.

Optionally, the radio access network device may determine the seventh indication information based on whether the at least one frequency includes a frequency that does not belong to the first frequency band.

For example, the radio access network device may determine whether the at least one frequency includes a frequency that does not belong to the first frequency band. When the at least one frequency includes frequencies that do not belong to the first frequency band, a frequency band in which one or more of the frequencies that do not belong to the first frequency band are located is determined as the fourth frequency band. When the at least one frequency does not include a frequency that does not belong to the first frequency band, it may be considered that each of the at least one frequency is located in one or more of the at least one first frequency band.

In another example, when one or more of the at least one frequency are located in the fourth frequency band, the seventh indication information indicates the terminal device to perform data transmission on the fourth frequency band.

Optionally, in this example, that the seventh indication information indicates the terminal device to perform data transmission on the fourth frequency band includes: The seventh indication information indicates the terminal device to switch to the fourth frequency band, to perform data transmission on the fourth frequency band.

In another example, when each of the at least one frequency is located in the at least one first frequency band, the seventh indication information indicates the terminal device to release the RRC connection.

Optionally, in this example, that the seventh indication information indicates the terminal device to release the RRC connection includes: The seventh indication information indicates the terminal device to transition to the RRC inactive state or the RRC idle state. Therefore, the terminal device may transition from the RRC connected state to the RRC inactive state or the RRC idle state based on the seventh indication information, to release the RRC connection.

Case 2: The at least one first frequency band is all of frequency bands on which data transmission can be performed, that is, data transmission cannot be performed on any frequency band when the first trigger condition is met. In this case, the seventh indication information indicates the terminal device to release the RRC connection.

In an example, the seventh indication information is determined based on request information used to request to release the RRC connection.

Optionally, when the first trigger condition is met, the terminal device may send, to the radio access device, request information used to request to release the RRC connection. Therefore, the radio access network device can determine the seventh indication information based on the request information used to request to release the RRC connection.

For example, the request information used to request to release the RRC connection may be located in an RRCReleaseRequest field in an RRC message, and the RRCReleaseRequest field indicates to release the RRC connection. In this case, the first request message may be represented by using one bit. For example, the one bit may be 1, or the one bit may be 0.

In another example, the seventh indication information is determined based on indication information indicating that the first trigger condition is met.

Optionally, when the first trigger condition is met, the terminal device may send, to the radio access network device, indication information indicating that the first trigger condition is met, so that the radio access network device determines the seventh indication information based on the indication information indicating that the first trigger condition is met or the location indication information.

In another example, the seventh indication information is determined based on third location indication information. The third location indication information indicates a location of the terminal device when the first trigger condition is met, and/or the third location indication information indicates that the first trigger condition is met.

Optionally, the radio access network device may determine, based on the location of the terminal device when the first trigger condition is met and the first domain, whether the terminal device is about to enter the first domain. Therefore, when the terminal device is about to enter the first domain, the seventh indication information is sent to the terminal device. Alternatively, the radio access network device sends the seventh indication information to the terminal device based on triggering of the indication information indicating that the terminal device is about to enter the first domain.

For example, the radio access network device may obtain the third location indication information from the terminal device, that is, the terminal device directly sends the third location indication information to the radio access network device. Alternatively, the radio access network device may obtain the third location indication information from the core network, that is, the terminal device sends the third location indication information to the core network, and the core network sends the third location indication information to the radio access network device. For example, the terminal device may send the third location indication information to an LMF network element in the core network, so that the LMF network element sends the third location indication information to the radio access network device.

Scenario 2: The terminal device communicates with a plurality of cells whose quantity is greater than or equal to 2. The plurality of radio access network devices include a serving radio access network device of the terminal device. Therefore, a cell of the serving radio access network device may be referred to as a primary cell, and a cell in the plurality of cells other than the primary cell may be referred to as a secondary cell. The scenario 2 may also be considered as a CA scenario. For ease of description, the following uses an example in which the terminal device communicates with cells of two radio access network devices for description.

Optionally, in the scenario 2, the terminal device may perform data transmission on the fourth frequency band based on an indication of the seventh indication information when the first trigger condition is met, where the seventh indication information indicates to perform data transmission on the fourth frequency band.

For example, the seventh indication information is determined by the radio access device and sent to the terminal device. For example, in the scenario 2, the seventh indication information may be implemented in the following two possible implementations.

In a possible implementation, the seventh indication information is determined based on a request message used to request to perform data transmission on the fourth frequency band.

Optionally, in this example, the request message used to request to perform data transmission on the fourth frequency band may be further used to request to switch to the fourth frequency band. Correspondingly, that the seventh indication information indicates the terminal device to perform data transmission on the fourth frequency band includes: The seventh indication information indicates the terminal device to switch to the fourth frequency band, to perform data transmission on the fourth frequency band.

In an example, a frequency of the primary cell is located in the first frequency band, and a frequency of the secondary cell is located in another frequency band that does not belong to any one of the at least one first frequency band.

Optionally, in this example, the terminal device may determine another frequency band that does not belong to any one of the at least one first frequency band as the fourth frequency band. In this case, it may be considered that the frequency of the secondary cell is located in the fourth frequency band.

Optionally, in this example, the request message used to request to perform data transmission on the fourth frequency band may be further used to request to perform data transmission in the secondary cell. Correspondingly, in this case, that the seventh indication information indicates the terminal device to perform data transmission on the fourth frequency band includes: The seventh indication information indicates the terminal device to perform data transmission in the secondary cell.

For example, "used to request to perform data transmission in the secondary cell" may also be understood as "used to request to perform data transmission only in the secondary cell". Correspondingly, in this case, that the seventh indication information indicates the terminal device to perform data transmission in the secondary cell includes: The seventh indication information indicates the terminal device to perform data transmission only in the secondary cell.

Alternatively, "used to request to perform data transmission in the secondary cell" may also be understood as "used to request to change the secondary cell to the primary cell". Correspondingly, that the seventh indication information indicates the terminal device to perform data transmission in the secondary cell includes: The seventh indication information indicates the terminal device to change the secondary cell to the primary cell. Therefore, based on the seventh indication information, the terminal device may change the secondary cell to the primary cell, and perform data transmission in the changed primary cell, to implement transmission on the fourth frequency band.

Alternatively, "used to request to perform data transmission in the secondary cell" may also be understood as "used to request to suspend data transmission in the primary cell". Correspondingly, that the seventh indication information indicates the terminal device to perform data transmission in the secondary cell includes: The seventh indication information indicates the terminal device to suspend data transmission in the primary cell. Therefore, based on the seventh indication information, the terminal device can suspend data transmission in the primary cell, and further, can continue data transmission in the secondary cell.

In another example, a frequency of the primary cell is located in another frequency band that does not belong to any one of the at least one first frequency band, and a frequency of the secondary cell is located in the first frequency band.

Optionally, in this example, the terminal device may determine another frequency band that does not belong to any one of the at least one first frequency band as the fourth frequency band. In this case, it may be considered that the frequency of the primary cell is located in the fourth frequency band.

Optionally, in this example, the request message used to request to perform data transmission on the fourth frequency band may be further used to request to perform data transmission in the primary cell. Correspondingly, in this case, that the seventh indication information indicates the terminal device to perform data transmission on the fourth frequency band includes: The seventh indication information indicates the terminal device to perform data transmission in the primary cell.

For example, "used to request to perform data transmission in the primary cell" may also be understood as "used to request to perform data transmission only in the primary cell". Correspondingly, that the seventh indication information indicates the terminal device to perform data transmission in the primary cell includes: The seventh indication information indicates the terminal device to perform data transmission only in the primary cell. Therefore, based on the second indication information, the terminal device can suspend data transmission in the secondary cell, and further, can continue data transmission in the primary cell, to implement data transmission on the fourth frequency band.

Alternatively, "used to request to perform data transmission in the primary cell" may also be understood as "used to request to delete or deactivate the secondary cell". Correspondingly, that the seventh indication information indicates the terminal device to perform data transmission in the primary cell includes: The seventh indication information indicates the terminal device to delete or deactivate the secondary cell. Therefore, the terminal device can delete the secondary cell or deactivate the secondary cell based on the second indication information, so that data transmission cannot be performed in the secondary cell, to implement data transmission on the fourth frequency band.

In another possible implementation, the seventh indication information is determined based on the third location indication information.

Optionally, the radio access network device may determine, based on the location of the terminal device when the first trigger condition is met and the first domain, whether the terminal device is about to enter the first domain. In this case, the seventh indication information is sent to the terminal device. Alternatively, the radio access network device sends the seventh indication information to the terminal device based on triggering of the indication information indicating the first trigger condition.

In an example, a frequency of the primary cell is located in the first frequency band, and a frequency of the secondary cell is located in another frequency band that does not belong to any one of the at least one first frequency band.

Optionally, in this example, the terminal device may determine another frequency band that does not belong to any one of the at least one first frequency band as the second frequency band. In this case, it may be considered that the frequency of the secondary cell is located in the fourth frequency band.

Optionally, in this example, that the seventh indication information indicates the terminal device to perform data transmission on the fourth frequency band includes: The seventh indication information indicates the terminal device to perform data transmission in the secondary cell.

For example, that the seventh indication information indicates the terminal device to perform data transmission in the secondary cell includes: The seventh indication information indicates the terminal device to perform data transmission only in the secondary cell. Therefore, based on the seventh indication information, the terminal device can suspend data transmission in the primary cell, and further, can continue data transmission in the secondary cell.

Alternatively, the seventh indication information indicates the terminal device to change the secondary cell to the primary cell. Therefore, based on the seventh indication information, the terminal device may change the secondary cell to the primary cell, and perform data transmission in the changed primary cell, to implement transmission on the seventh frequency band.

In another example, a frequency of the primary cell is located in another frequency band that does not belong to any one of the at least one first frequency band, and a frequency of the secondary cell is located in the first frequency band.

Optionally, in this example, the terminal device may determine another frequency band that does not belong to any one of the at least one first frequency band as the second frequency band. In this case, it may be considered that the frequency of the primary cell is located in the fourth frequency band.

Optionally, in this example, that the seventh indication information indicates the terminal device to perform data transmission on the fourth frequency band includes: The seventh indication information indicates the terminal device to perform data transmission in the primary cell.

For example, that the seventh indication information indicates the terminal device to perform data transmission in the primary cell includes: The seventh indication information indicates the terminal device to perform data transmission only in the primary cell. Therefore, the terminal device can delete the secondary cell or deactivate the secondary cell based on the seventh indication information, so that data transmission cannot be performed in the secondary cell, to implement data transmission on the fourth frequency band. Alternatively, the fourth indication information indicates the terminal device to delete or deactivate the secondary cell. Alternatively, the seventh indication information indicates the terminal device to suspend data transmission in the secondary cell. Therefore, based on the seventh indication information, the terminal device can suspend data transmission in the secondary cell, and further, can continue data transmission in the primary cell.

It should be noted that the foregoing scenario 2 describes only an example of a case in which the terminal device communicates with the cells of the two radio access network devices. A case in which the terminal device communicates with cells of more than two radio access network devices is similar to the case in which the terminal device communicates with the cells of the two radio access network devices. For details, refer to an implementation in which the terminal device communicates with the cells of the two radio access network devices. The details are not described herein again.

The foregoing describes the seventh indication information in this embodiment of this application. The following describes in detail the "first trigger condition" in the foregoing embodiments.

In an example, the first trigger condition includes: A distance between the terminal device and a first location is less than or equal to a first threshold, where the first location is determined based on the first domain.

Optionally, that the distance between the terminal device and the first location is less than or equal to a first threshold includes: The distance between the terminal device and the first location is less than or equal to the first threshold within first duration.

For example, that the distance between the terminal device and the first location is less than or equal to the first threshold within the first duration may be understood as follows: The terminal device is always close to the first domain within the first duration, or the terminal device is always near the first domain within the first duration.

According to the optional solution, the terminal device determines that a first trigger threshold is met when the distance between the terminal device and the first location is less than or equal to the first threshold within the first duration, to ensure that the terminal device is always near the first domain. Therefore, impact of a ping-pong effect is eliminated, and the terminal device is prevented from mistakenly triggering the first trigger condition.

In another example, the first trigger condition includes: A sum of a distance between the terminal device and a first location and a first offset value is less than or equal to a first threshold, where the first location is determined based on the first domain; or a difference between the distance between the terminal device and the first location and the first offset value is less than or equal to the first threshold.

For example, the first offset value may be determined based on speed information of the terminal device. Different speed information may correspond to different offset values. For example, a correspondence between different speed information and different offset values may be preconfigured. Therefore, in this solution, an offset value corresponding to a current speed information of the terminal device is determined as the first offset value from the correspondence based on the current speed information.

Optionally, that the sum of the distance between the terminal device and the first location and the first offset value is less than or equal to the first threshold includes: The sum of the distance between the terminal device and the first location and the first offset value is less than or equal to the first threshold within first duration.

For example, that the sum of the distance between the terminal device and the first location and the first offset value is less than or equal to the first threshold within the first duration may be understood as follows: The terminal device is always close to the first domain within the first duration, or the terminal device is always near the first domain within the first duration. In addition, the distance between the terminal device and the first location is less than or equal to a difference between the first threshold and the first offset value within the first duration. Optionally, that the difference between the distance between the terminal device and the first location and the first offset value is less than or equal to the first threshold includes: The difference between the distance between the terminal device and the first location and the first offset value is less than or equal to the first threshold within the first duration.

For example, that the difference between the distance between the terminal device and the first location and the first offset value is less than or equal to the first threshold within the first duration may be understood as follows: The terminal device is always close to the first domain within the first duration, or the terminal device is always near the first domain within the first duration. In addition, the distance between the terminal device and the first location is less than or equal to a difference between the first threshold and the first offset value within the first duration.

Optionally, the distance between the terminal device and the first location is understood as a vertical distance between the terminal device and the first location. For example, the terminal device may measure the distance between the terminal device and the first location in real time, to determine whether the first trigger condition is met.

Optionally, the first location is a geographical location, and is represented by using longitude and latitude and an elevation value. The elevation value is a height from a sea level.

Optionally, the first location is a location of a reference point that is in a plurality of reference points on a boundary of the first domain and that is closest to the terminal device; the first location is located on a line formed by connecting any two reference points on the boundary of the first domain; or the first location is located in the first domain.

For example, as shown in (a) in FIG. 13, the first location may be located on a boundary of the first domain. In this case, the first location is a location of a reference point that is in a plurality of reference points on the boundary of the first domain and that is closest to the terminal device. Alternatively, as shown in (b) in FIG. 13, the first location is located on a line formed by connecting any two reference points on the boundary of the first domain. Alternatively, the first location is located at any location in the first domain. For example, as shown in (c) in FIG. 13, the first location may be located in a center of the first domain. A solid dot in FIG. 13 ((a) in FIG. 13, (b) in FIG. 13, or (c) in FIG. 13) is represented as a first location (that is, a first location #1, a first location #2, or a first location #3), and a length of a bidirectional arrow is a distance between the terminal device and the first location.

Optionally, values of the first threshold corresponding to the first locations in different definitions are different. For example, the first location #1, the first location #2, and the first location #3 in FIG. 13 respectively correspond to different values of the first threshold. In this embodiment of this application, a value of the first threshold is not limited herein, provided that when the first trigger condition is met, the terminal device is at a moment before entering the first domain.

Optionally, values of the first threshold remain unchanged for the first locations in a same definition. However, a geographical location of the first location may change correspondingly based on an orientation of the terminal device.

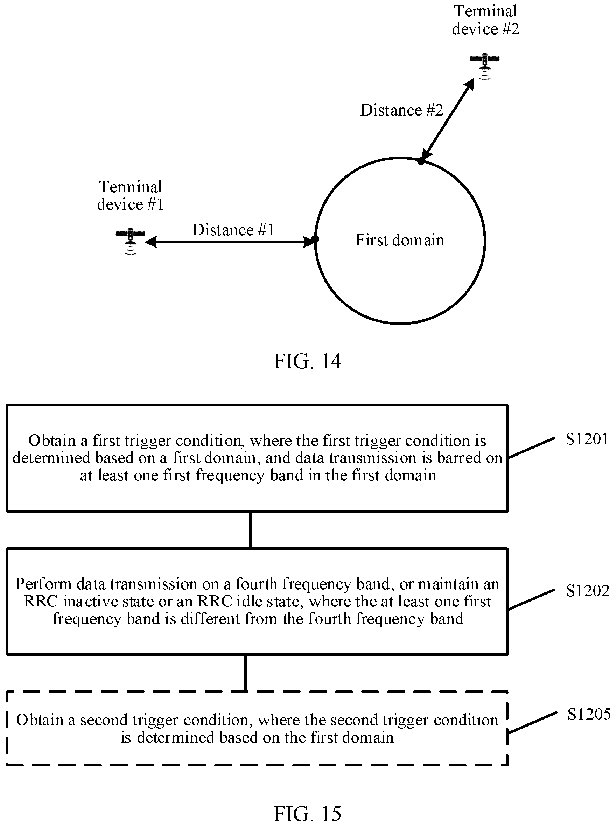

For example, the first location is defined as the location of the reference point that is in the plurality of reference points on the boundary of the first domain and that is closest to the terminal device. As shown in FIG. 14, when terminal devices are in different orientations of the first domain, locations of reference points that are in the plurality of reference points on the boundary of the first domain and that are closest to the terminal devices are different. That is, in FIG. 14, a first location corresponding to a terminal device #1 is a solid circle whose distance from the terminal device #1 is a distance #1, and a first location corresponding to a terminal device #2 is a solid circle whose distance from the terminal device #2 is a distance #2.

Optionally, the first trigger condition further includes: The terminal device performs data transmission on one or more of the at least one first frequency band.

For example, that the terminal device performs data transmission on the one or more of the at least one first frequency band includes: Before the terminal device enters the first domain, the terminal device performs data transmission on the one or more of the at least one first frequency band.

For example, the terminal device determines, based on the at least one first frequency band, whether the terminal device performs data transmission on one or more of the at least one first frequency band before entering the first domain. When the terminal device performs data transmission on the one or more of the at least one first frequency band, if a relationship between the distance between the terminal device and the first location and the first threshold meets the relationship in the foregoing two examples, reporting of the third measurement result is triggered, or indication information that can trigger the second indication information (for example, the third location indication information, the indication information used to request to perform data transmission on the fourth frequency band, or the request information used to request to release the RRC connection) is sent.

According to this optional solution, because data transmission is barred on the at least one first frequency band in the first domain, before the terminal device enters the first domain, and the terminal device performs data transmission on the one or more of the at least one first frequency band, the terminal device needs to determine, based on a relationship between the distance between the terminal device and the first location and the first threshold, whether to trigger reporting. Therefore, data transmission is not performed on the at least one first frequency band in the first domain. When the terminal device does not perform data transmission on any one of the at least one first frequency band, no data transmission on the at least one first frequency band in the first domain can be implemented on the terminal device without frequency band switching or RRC state transition. In this case, the terminal device does not need to trigger reporting.

Optionally, the first trigger condition further includes: A distance change of the terminal device in a unit time is greater than or equal to a third threshold. For example, the unit time may be at a granularity of a second, a millisecond, or the like. This is not limited in this application.

For example, that the distance change of the terminal device in the unit time is greater than or equal to the third threshold may be understood as that the distance change of the terminal device relative to the first location is greater than or equal to the third threshold in the unit time.

Optionally, a value of the distance change may be a positive number or a negative number. When the value of the distance change is a positive number, the terminal device gradually approaches a center of the first domain. When the value of the distance change is a negative number, the terminal device is gradually away from a center of the first domain.

Optionally, the distance change of the terminal device relative to the first location may be a result obtained by dividing a difference between a first distance and a second distance by a time difference between a first moment and a second moment. The first distance is a distance between the terminal device and the first location at the first moment, and the second distance is a distance between the terminal device and the first location at the second moment. The second moment is after the first moment.

For example, a distance between the terminal device and the first location at the first moment is 15 meters, a distance between the terminal device and the first location at the second moment is 10 meters, and a difference between the first moment and the second moment is 5 seconds. In this case, the distance change of the terminal device in the unit time is 1 meter/second. In addition, the distance change is a positive number. Therefore, it may be considered that the terminal device approaches the first domain at a speed of 1 meter/second.

According to this optional solution, the terminal device may determine, based on a relationship between the distance change of the terminal device in the unit time and the third threshold, whether the terminal device gradually approaches the center of the first domain, to ensure that reporting is triggered when the first trigger condition is met, and the terminal device can enter the first domain, so that a solution in which the terminal device performs data transmission on the fourth frequency band or releases the RRC connection based on an indication of the seventh indication information can be implemented in the first domain, and data transmission is barred on the at least one first frequency band in the first domain, that is, the terminal device implements an NTZ mechanism.

It should be noted that the foregoing describes merely an example of some content included in the first trigger condition. Actually, the foregoing examples may be combined in any manner. For example, the first trigger condition includes: The distance between the terminal device and the first location is less than or equal to the first threshold within the first duration; the terminal device performs data transmission on the one or more of the at least one first frequency band; and the distance change of the terminal device in the unit time is greater than or equal to the third threshold. In this case, it may be considered that the first trigger condition is met only when all the three conditions are met.

Optionally, in a process in which the terminal device determines whether the first trigger condition is met, if the terminal device has entered the first domain, it is considered that the first trigger condition is met, and reporting of the third measurement result is triggered, or indication information that can trigger the second indication information (for example, third location indication information, indication information used to request to perform data transmission on the fourth frequency band, or request information used to request to release an RRC connection) is sent.

Optionally, after step S1202, as shown in FIG. 15, the communication method may further include the following steps.

S1205: The terminal device obtains a second trigger condition, where the second trigger condition is determined based on the first domain.

Optionally, when the second trigger condition is met, it indicates that the terminal device is at a moment after leaving the first domain. For example, when the first trigger condition is met, it may indicate that the terminal device has left the first domain at a current moment. Optionally, when the second trigger condition is met, the terminal device may perform an operation in the following two manners.

Manner 1: The terminal device performs an operation based on eighth indication information, where the eighth indication information indicates the terminal device to perform data transmission on a fifth frequency band, or the eighth indication information indicates the terminal device to set up the RRC connection, the fourth measurement result includes a measurement result corresponding to a frequency in the fifth frequency band, and the fourth measurement result is a measurement result obtained when the second trigger condition is met.

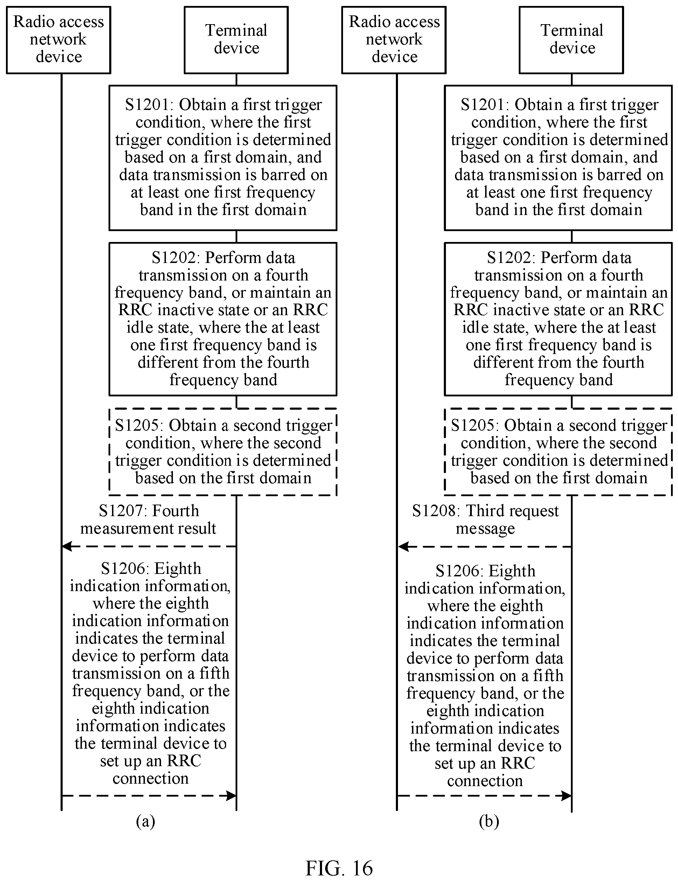

For example, as shown in (a) or (b) in FIG. 16, after step S1205, the communication method may further include the following step S1206:
S1206: The radio access network device sends the eighth indication information to the terminal, and correspondingly, the terminal device receives the eighth indication information from the radio access network device.

In an example, the eighth indication information is determined based on the fourth measurement result. In this case, the eighth indication information indicates the terminal device to perform data transmission on the fifth frequency band.

Optionally, in this example, if the first trigger condition is met, the terminal device performs data transmission on the fourth frequency band.

For example, before step S1206, as shown in (a) in FIG. 16, the communication method may further include the following step S1207:
S1207: The terminal device sends the fourth measurement result to the radio access network device; and correspondingly, the radio access network device receives the first measurement result from the terminal device, where the fourth measurement result includes a measurement result corresponding to each of at least one frequency.

Optionally, the fifth frequency band may be one of the at least one first frequency band, or the fifth frequency band is one of frequency bands in frequency bands in which at least one frequency of the fourth measurement result is located other than the at least one first frequency band and the fourth frequency band.

Optionally, the terminal device may perform real-time measurement, and obtain a real-time measurement result, to determine a measurement result obtained when the second trigger condition is met as the fourth measurement result.

Alternatively, when the second trigger condition is met, the terminal device may perform measurement based on a measurement configuration from the radio access network device, to determine the fourth measurement result. For example, when the second trigger condition is met, the terminal device may send, to the radio access network device, indication information indicating a location of the terminal device, or the terminal device sends, to the radio access network device, indication information indicating that the second trigger condition is met. Therefore, the radio access network device sends the measurement configuration to the terminal device based on the indication information, so that the terminal device determines the fourth measurement result.

Optionally, the radio access network device may determine, based on the fourth measurement result, whether the fourth measurement result meets a handover condition. When the fourth measurement result meets the handover condition, the radio access network device may send, to the terminal device, configuration information used for handover (namely, the eighth indication information), so that the terminal device can perform handover based on the configuration information.

In addition, when the fourth measurement result does not meet the handover condition, the radio access network device does not need to send the configuration information used for handover. In this case, the terminal device still performs data transmission on the fourth frequency band.

In another example, the eighth indication information is determined based on a third request message. In this case, the eighth indication information indicates the terminal device to perform data transmission on the fifth frequency band, or the eighth indication information indicates the terminal device to set up an RRC connection.

For example, before step S1206, as shown in (b) in FIG. 16, the communication method may further include the following steps.

S1208: The terminal device sends a third request message to the radio access network device, and correspondingly, the radio access network device receives the third request message from the terminal device, where the third request message is used to request to set up the RRC connection, or the third request message is used to request to perform data transmission on the fifth frequency band.

Optionally, in this example, if the terminal device maintains the RRC inactive state or the RRC idle state when the first trigger condition is met, the third request message is used to request to set up the RRC connection. Correspondingly, the eighth indication information indicates the terminal device to set up the RRC connection.

If the terminal device performs data transmission on the fourth frequency band when the first trigger condition is met, the third request message is used to request to perform data transmission on the fifth frequency band. Correspondingly, the eighth indication information indicates the terminal device to perform data transmission on the fifth frequency band.

For example, the terminal device may determine the fifth frequency band based on the fourth measurement result. A process in which the terminal device determines the fifth frequency band based on the fourth measurement result is similar to a process in which the terminal device determines the second frequency band based on the first measurement result in the foregoing embodiment. For details, refer to related descriptions in the foregoing embodiment. The details are not described herein again.

In addition, when the first trigger condition is met, if the terminal device performs data transmission on the fourth frequency band, and the terminal determines that handover does not need to be performed, the terminal device does not need to send the third request message. Therefore, the radio access network device does not need to deliver the eighth indication information, and the terminal device still performs data transmission on the fourth frequency band.

Manner 2: When the second trigger condition is met, the terminal device may autonomously determine whether to perform an operation. Further, after performing the operation, the terminal device may send acknowledgment information to the radio access network device, to notify the radio access network device of the operation performed by the terminal device.

For example, if the terminal device maintains the RRC inactive state or the RRC idle state when the first trigger condition is met, the terminal device may set up an RRC connection when the second trigger condition is met. Further, after setting up the RRC connection, the terminal device may send an acknowledgment message to the radio access network device, to indicate that the terminal device has set up the RCC connection.

If the terminal device performs data transmission on the fourth frequency band when the first trigger condition is met, when the second trigger condition is met, the terminal device may determine, based on the fourth measurement result, whether frequency band switching needs to be performed. If frequency band switching needs to be performed, the terminal device may switch to the fifth frequency band. Further, when switching to the fifth frequency band, the terminal device may send an acknowledgment message to the radio access network device, to indicate that the terminal device has switched to the fifth frequency band.

Manner 3: When the second trigger condition is met, the terminal device may send fourth location indication information to the radio access network device, where the fourth location indication information indicates a location of the terminal device when the second trigger condition is met, or the second location indication information indicates that the second trigger condition is met.

Optionally, in the solution 3, the radio access network device may determine, based on the fourth location indication information, that the terminal device has left the first domain in this case, so that a further operation can be performed based on a current state of the terminal device.

For example, if the terminal device performs data transmission on the fourth frequency band when the first trigger condition is met, the radio access network device may send, to the terminal device, indication information indicating the terminal device to send a fourth measurement result. If the terminal device is in the RRC inactive state or the RRC idle state when the first trigger condition is met, the radio access network device may send, to the terminal device, configuration information used to set up the RRC connection. The following describes in detail the "second trigger condition" in the foregoing embodiments.

In an example, the second trigger condition includes: A distance between the terminal device and a second location is less than or equal to a fourth threshold, where the second location is determined based on the first domain.

Optionally, that the distance between the terminal device and the second location is greater than or equal to the fourth threshold includes: The distance between the terminal device and the second location is greater than or equal to the fourth threshold within second duration.

For example, that the distance between the terminal device and the second location is greater than or equal to the fourth threshold within the second duration may be understood as follows: The terminal device always away from the first domain within the second duration, or the terminal device always maintains a specific distance from the first domain within the second duration.

According to this optional solution, the terminal device determines that a second trigger threshold is met when the distance between the terminal device and the second location is greater than or equal to the fourth threshold within the second duration, to ensure that the terminal device has left the first domain. Therefore, impact of a ping-pong effect is eliminated, and the terminal device is prevented from mistakenly triggering the second trigger condition.

In another example, the second trigger condition includes: A sum of a distance between the terminal device and a second location and a second offset value is greater than or equal to a fourth threshold, where the second location is determined based on the first domain; or a difference between the distance between the terminal device and the second location and the second offset value is greater than or equal to the fourth threshold.

For example, an implementation of the second offset value is similar to an implementation of the first offset value. For details, refer to related descriptions of the first offset value. The details are not described herein again. For example, a value of the second offset value may be the same as or different from a value of the first offset value.

Optionally, that the sum of the distance between the terminal device and the second location and the second offset value is greater than or equal to the fourth threshold includes: The sum of the distance between the terminal device and the second location and the second offset value is greater than or equal to the fourth threshold within the second duration.

For example, that the sum of the distance between the terminal device and the second location and the second offset value is greater than or equal to the fourth threshold within the second duration may be understood as follows: The terminal device is always away from the first domain within the second duration, or the terminal device always maintains a specific distance from the first domain within the first duration. In addition, the distance between the terminal device and the second location is greater than or equal to a sum of the fourth threshold and the second offset value within the second duration.

Optionally, that the difference between the distance between the terminal device and the second location and the second offset value is greater than or equal to the fourth threshold includes: The difference between the distance between the terminal device and the second location and the second offset value is greater than or equal to the fourth threshold within the second duration.

For example, that the difference between the distance between the terminal device and the second location and the second offset value is greater than or equal to the fourth threshold within the second duration may be understood as follows: The terminal device always away from the first domain within the second duration, or the terminal device always maintains a specific distance from the first domain within the first duration. In addition, the distance between the terminal device and the second location is greater than or equal to a difference between the fourth threshold and the second offset value within the second duration.

Optionally, the distance between the terminal device and the second location is understood as a vertical distance between the terminal device and the second location. For example, the terminal device may measure the distance between the terminal device and the second location in real time, to determine whether the second trigger condition is met.

Optionally, the second location is a location of a reference point that is in a plurality of reference points on a boundary of the first domain and that is closest to the terminal device; the second location is located on a line formed by connecting any two reference points on the boundary of the first domain; or the second location is located in the first domain.

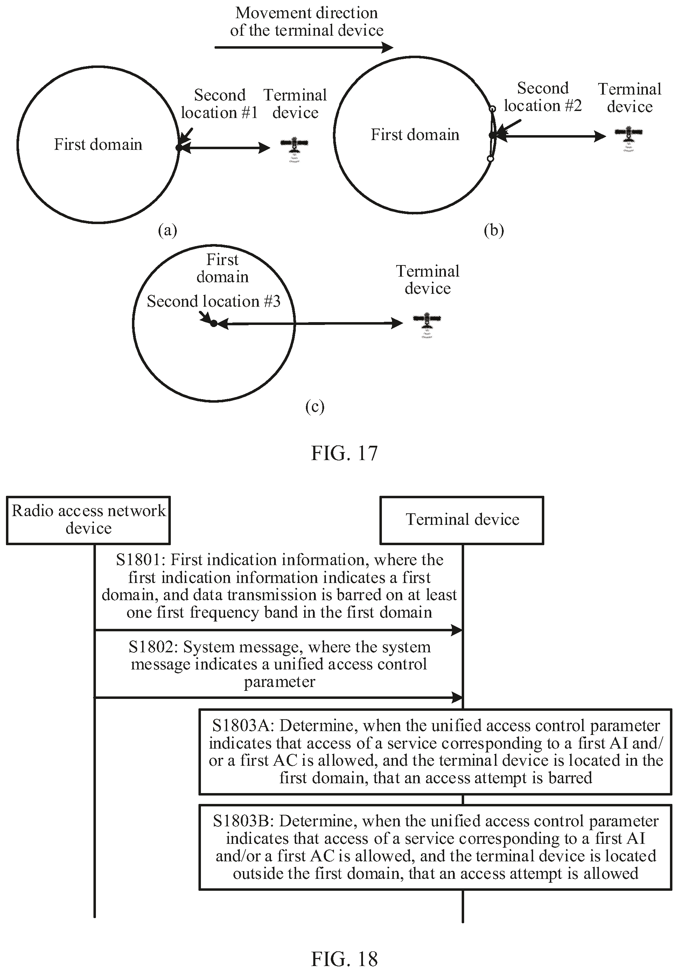

For example, as shown in (a) in FIG. 17, the second location may be located on a boundary of the first domain. In this case, the second location is a location of a reference point that is in a plurality of reference points on the boundary of the first domain and that is closest to the terminal device. Alternatively, as shown in (b) in FIG. 17, the second location is located on a line formed by connecting any two reference points on the boundary of the first domain. Alternatively, the second location is located at any location in the first domain. For example, as shown in (c) in FIG. 17, the second location may be located in a center of the first domain. A solid circle in FIG. 17 ((a) in FIG. 17, (b) in FIG. 17, or (c) in FIG. 17) represents a second location (that is, a second location #1, a second location #2, or a second location #3), and a length of a bidirectional arrow is a distance between the terminal device and the second location.

For example, an implementation of the second location is similar to an implementation of the first location. For details, refer to related descriptions of the first location. The details are not described herein again.

Optionally, the second trigger condition further includes: The terminal device performs data transmission on one or more frequency bands other than the at least one first frequency band, and the fourth measurement result includes a measurement result corresponding to a frequency in the one or more frequency bands.

For example, that the terminal device performs data transmission on the one or more frequency bands other than the at least one first frequency band includes: After the terminal device leaves the first domain, the terminal device performs data transmission on the one or more frequency bands other than the at least one first frequency band.

For example, the terminal device determines, based on the at least one first frequency band, whether the terminal device performs data transmission on one or more of the at least one first frequency band after leaving the first domain. When the terminal device does not perform data transmission on the one or more of the at least one first frequency band, if a relationship between the distance between the terminal device and the first location and the first threshold meets the relationship in the foregoing two examples, reporting of the fourth measurement result is triggered, or indication information that can trigger the eighth indication information (for example, the fourth location indication information, the indication information used to request to perform data transmission on the fourth frequency band, or the request information used to request to release the RRC connection) is sent.

According to this optional solution, because data transmission is barred on the at least one first frequency band in the first domain, the terminal device does not perform data transmission on the first frequency band in the first domain (for example, performs data transmission on the fourth frequency band based on an instruction of the seventh indication information). Therefore, after leaving the first domain, the terminal device still performs data transmission on the fourth frequency band. In this case, the terminal device may determine, based on a relationship between the distance between the terminal device and the second location and the fourth threshold, whether to report the fourth measurement result, or send indication information that can trigger the eighth indication information, to further determine whether to switch to a frequency band.

Optionally, the second trigger condition further includes: A distance change of the terminal device in a unit time is greater than or equal to a fifth threshold.

For example, that the distance change of the terminal device in the unit time is greater than or equal to the fifth threshold may be understood as follows: The distance change of the terminal device relative to the second location is greater than or equal to the fifth threshold in the unit time.

Optionally, the distance change of the terminal device relative to the second location may be a result obtained by dividing a difference between a third distance and a fourth distance by a time difference between a third moment and a fourth moment. The third distance is a distance between the terminal device and the second location at the third moment, and the fourth distance is a distance between the terminal device and the second location at the fourth moment. The fourth moment is after the third moment.

For example, a distance between the terminal device and the second location at the third moment is 5 meters, a distance between the terminal device and the second location at the fourth moment is 10 meters, and a difference between the third moment and the fourth moment is 5 seconds. In this case, the distance change of the terminal device in the unit time is -1 meter/second. In addition, because the distance change is a negative number, it may be considered that the terminal device is away from the first domain at a speed of 1 meter/second.

It should be noted that the foregoing describes merely an example of the communication methods in FIG. 7 and FIG. 12. Actually, the communication methods in FIG. 7 and FIG. 12 may also be used in combination. For example, in the method shown in FIG. 7, the terminal device may determine, based on the first trigger condition, whether the terminal device is about to enter the first domain. For example, when the first trigger condition is met, it may be considered that the terminal device is about to enter the first domain. Similarly, the terminal device may determine, based on the second trigger condition, whether the terminal device has left the first domain. For example, when the second trigger condition is met, it may be considered that the terminal device has left the first domain. Details are not described herein again. In addition to the foregoing method, an embodiment of this application further provides a communication method. FIG. 18 is a flowchart of another communication method according to an embodiment of this application. The method is applied to a scenario in which the terminal device is in the RRC inactive state or the RRC idle state. The communication method may include the following steps.

S1801: Step S1801 is the same as step S701. For details, refer to related descriptions of step S701. Details are not described herein again.

S1802: The radio access network device sends a system message to the terminal device, and correspondingly, the terminal device receives the system message from the radio access network device, where the system message indicates a unified access control parameter.

For example, the unified access control parameter may be a UAC parameter, and the UAC parameter indicates whether an access attempt of the terminal device corresponding to an AI is allowed.

Optionally, after step S1802, the terminal device may further perform S1803A or S1803B.

S1803A: Determine, when the unified access control parameter indicates that access of a service corresponding to a first AI and/or a first AC is allowed, and the terminal device is located in the first domain, that an access attempt is barred, where the first AI is a service identifier of the terminal device, and the first AC is a service type of the terminal device.

In a possible implementation, determining, when the unified access control parameter indicates that access of the service corresponding to the first AI and/or the first AC is allowed, and the terminal device is located in the first domain, that the access attempt is barred includes: performing access barring check based on the first AI and/or the first AC and the unified access control parameter, to obtain a first result, where when the unified access control parameter indicates that access of the terminal device corresponding to the AI and/or the AC is allowed, the first result is that the access attempt is allowed, or when the unified access control parameter indicates that access of the terminal device corresponding to the AI and/or the AC is barred, the first result is that the access attempt is barred; and when the terminal device is located in the first domain, and the first result is that the access attempt is allowed, changing the first result to that the access attempt is barred.

For example, for a process of performing access barring check based on the first AI and/or the first AC and the unified access control parameter, to obtain the first result, refer to related descriptions of the UAC parameter. Details are not described herein again.

For example, in this possible implementation, whether the unified access control parameter indicates that the access attempt is allowed or indicates that the access attempt is barred is first determined, and then whether the terminal device is located in the first domain is determined. When the unified access control parameter indicates that the access attempt is allowed, if the terminal device is located in the first domain, a result (that is, the first result) indicated by the unified access control parameter is changed to that the access attempt is barred.

In another possible implementation, determining, when the unified access control parameter indicates that access of a terminal device corresponding to the AI and/or the AC is allowed, and the terminal device is located in the first domain, that the access attempt is barred includes:

When the terminal device is located in the first domain, performing access barring check based on the first AI and/or the first AC and the unified access control parameter, to obtain a second result, where the second result is that the access attempt is barred.

For example, in this possible implementation, whether the terminal device is located in the first domain is first determined. If the terminal device is located in the first domain, regardless of whether the unified access control parameter indicates that the access attempt is allowed or indicates that the access attempt is barred, it is considered that the access attempt of the terminal device is barred.

S1803B: Determine, when the unified access control parameter indicates that access of a service corresponding to a first AI and/or a first AC is allowed, and the terminal device is located outside the first domain, that an access attempt is allowed.

According to the communication method provided in this embodiment of this application, when the terminal device is in the RRC inactive state or the RRC idle state, if the terminal device needs to send data, the terminal device first needs to perform access barring check, and determines a location of the terminal device based on the access barring check, that is, whether the terminal device is located in the first domain. If the terminal device is located in the first domain, it is considered that the access attempt of the terminal device is barred, and the terminal device cannot request to perform RRC setup, so that the terminal device can maintain the RRC inactive state or the RRC idle state in the first domain.

The solution in FIG. 18 may also be applied to the communication methods in FIG. 7 and FIG. 12. For example, in the first domain, when the terminal device is in the RRC inactive state or the RRC idle state, if the terminal device needs to send data, the solution in FIG. 18 may be performed.

It may be understood that in the foregoing embodiments, the methods and/or the steps implemented by the radio access network device may alternatively be implemented by a component (for example, a processor, a chip, a chip system, a circuit, a logical module, or software like a chip or a circuit) that can be used in the radio access network device; and the methods and/or the steps implemented by the terminal device may alternatively be implemented by a component (for example, a processor, a chip, a chip system, a circuit, a logical module, or software like a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, an apparatus including the terminal device, or a component that can be used in the terminal device, for example, a chip or a chip system. Alternatively, the communication apparatus may be the radio access network device in the foregoing method embodiments, an apparatus including the radio access network device, or a component that can be used in the radio access network device, for example, a chip or a chip system. The communication apparatus may include a module or a unit configured to implement the foregoing data transmission method. Only main steps of the solutions are described below. For details, refer to the foregoing method embodiments. The details are not described below again.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

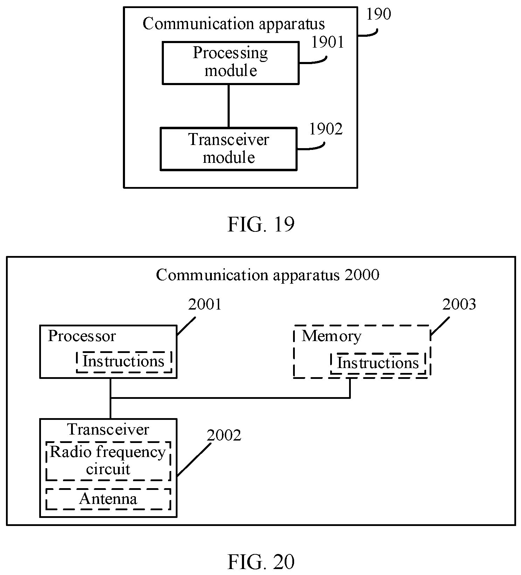

FIG. 19 is a diagram of a structure of a communication apparatus 190. The communication apparatus 190 includes a processing module 1901 and a transceiver module 1902. The communication apparatus 190 may be configured to implement a function of the radio access network device or the terminal device.

In some embodiments, the communication apparatus 190 may further include a storage module (which is not shown in FIG. 19), configured to store program instructions and data.

In some embodiments, the transceiver module 1902 may also be referred to as a transceiver unit, and is configured to implement a sending function and/or a receiving function. The transceiver module 1902 may include a transceiver circuit, a transceiver, a transceiver machine, or a communication interface.

In some embodiments, the transceiver module 1902 may include a receiving module and a sending module, respectively configured to perform receiving and sending steps performed by the radio access network device or the terminal device in the foregoing method embodiments, and/or configured to support another process of the technology described in this specification. The processing module 1901 may be configured to perform a processing (for example, determining or generating) step performed by the radio access network device or the terminal device in the foregoing method embodiments, and/or configured to support another process of the technology described in this specification.

When the communication apparatus 190 is configured to implement a function of the terminal device:

In a possible implementation, in some embodiments, the processing module 1901 is configured to: obtain a first domain, where data transmission is barred on at least one first frequency band in the first domain; and the processing module 1901 is further configured to: in the first domain, perform data transmission on a second frequency band, or maintain a radio resource control RRC inactive state or an RRC idle state, where the at least one first frequency band is different from the second frequency band.

Optionally, the transceiver module 1902 is configured to receive second indication information, where the second indication information indicates the terminal device to perform data transmission on the second frequency band, or the second indication information indicates the terminal device to release an RRC connection.

Optionally, the transceiver module 1902 is further configured to send a first request message, where the first request message is used to request to perform data transmission on the second frequency band, or the first request message is used to request to release the RRC connection.

Optionally, the processing module 1901 is further configured to determine a first measurement result, where the first measurement result includes a measurement result corresponding to at least one frequency; and when one or more of the at least one frequency are located in the second frequency band, the first request message is used to request to perform data transmission on the second frequency band; or when each of the at least one frequency is located in the at least one first frequency band, the first request message is used to request to release the RRC connection.

Optionally, the processing module 1901 is further configured to: determine a first measurement result, where the first measurement result is used to determine the second indication information; and send the first measurement result.

Optionally, the transceiver module 1902 is further configured to send third indication information, where the third indication information indicates the at least one first frequency band, and the third indication information is used to determine the second indication information.

Optionally, the transceiver module 1902 is further configured to send fourth indication information, where the fourth indication information indicates the first domain, and the fourth indication information is used to determine the second indication information.

Optionally, the transceiver module 1902 is further configured to: send a second measurement result, where the second measurement result is a measurement result obtained after the terminal device leaves the first domain; or send a second request message after the terminal device leaves the first domain, where the second request message is used to request to set up the RRC connection.

Optionally, the transceiver module 1902 is further configured to receive fifth indication information, where the fifth indication information indicates the terminal device to perform data transmission on a third frequency band, and the second measurement result includes a measurement result corresponding to a frequency in the third frequency band.

Optionally, the transceiver module 1902 is further configured to receive sixth indication information, where the sixth indication information indicates the terminal device to set up the RRC connection.

In another possible implementation, in some embodiments, optionally, the processing module 1901 is configured to: obtain a first trigger condition, where the first trigger condition is determined based on a first domain, and data transmission is barred on at least one first frequency band in the first domain; and when the first trigger condition is met, the transceiver module 1902 is configured to: send a third measurement result, where the third measurement result includes a measurement result corresponding to at least one frequency; and receive seventh indication information, where the seventh indication information indicates the terminal device to perform data transmission on a fourth frequency band, or the seventh indication information indicates the terminal device to release an RRC connection, one or more of the at least one frequency are located in the fourth frequency band, and the at least one first frequency band is different from the fourth frequency band.

Optionally, the processing module 1901 is further configured to obtain a second trigger condition, where the second trigger condition is determined based on the first domain; and when the second trigger condition is met, the transceiver module 1902 is further configured to send a fourth measurement result, where the fourth measurement result is a measurement result obtained after the terminal device leaves the first domain.

Optionally, the transceiver module 1902 is further configured to receive eighth indication information, where the eighth indication information indicates the terminal device to perform data transmission on a fifth frequency band, or the eighth indication information indicates the terminal device to set up the RRC connection, and the fourth measurement result includes a measurement result corresponding to a frequency in the fifth frequency band.

Optionally, the transceiver module 1902 is further configured to send ninth indication information, where the ninth indication information indicates the first domain, and the ninth indication information is used to determine the first trigger condition.

Optionally, the transceiver module 1902 is further configured to send tenth indication information, where the tenth indication information indicates the at least one first frequency band, and the tenth indication information is used to determine the first trigger condition.

In still another possible implementation, in some embodiments, the transceiver module 1902 is configured to receive first indication information, and receive the first indication information, where the first indication information indicates a first domain, and data transmission is barred on at least one first frequency band in the first domain; the transceiver module 1902 is further configured to receive a system message, where the system message indicates a unified access control parameter; and when the unified access control parameter indicates that access of a service corresponding to a first access identity AI and/or a first access category AC is allowed, and the terminal device is located in the first domain, the processing module 1901 is configured to determine that an access attempt is barred, where the first AI is a service identifier of the terminal device, and the first AC is a service type of the terminal device; or when the unified access control parameter indicates that access of the service corresponding to the first AI and/or the first AC is allowed, and the terminal device is located outside the first domain, the processing module 1901 is further configured to determine that the access attempt is allowed.

Optionally, the processing module 1901 is further configured to: perform access barring check based on the first AI and/or the first AC and the unified access control parameter, to obtain a first result, where when the unified access control parameter indicates that access of the terminal device corresponding to the AI and/or the AC is allowed, the first result is that the access attempt is allowed, or when the unified access control parameter indicates that access of the terminal device corresponding to the AI and/or the AC is barred, the first result is that the access attempt is barred; and when the terminal device is located in the first domain, and the first result is that the access attempt is allowed, change the first result to that the access attempt is barred.

Optionally, the processing module 1901 is further configured to: when the terminal device is located in the first domain, perform access barring check based on the first AI and/or the first AC and the unified access control parameter, to obtain a second result, where the second result is that the access attempt is barred.

When the communication apparatus 190 is configured to implement a function of the radio access network device:

In a possible implementation, in some embodiments, the transceiver module 1902 is configured to send second indication information, where the second indication information indicates a terminal device to perform data transmission on a second frequency band, or the second indication information indicates the terminal device to release an RRC connection, the second frequency band is different from at least one first frequency band in a first domain, and the radio access network device is a serving radio access network device of the terminal device.

Optionally, the transceiver module 1902 is further configured to send second indication information before the terminal device enters the first domain.

Optionally, the transceiver module 1902 is further configured to receive a first request message, where the first request message is used to request to perform data transmission on the second frequency band, or the first request message is used to request to release the RRC connection.

Optionally, the transceiver module 1902 is further configured to receive a first measurement result, where the first measurement result is used to determine the second indication information.

Optionally, the transceiver module 1902 is further configured to receive third indication information, where the third indication information indicates the at least one first frequency band, and the third indication information is used to determine the second indication information.

Optionally, the transceiver module 1902 is further configured to send fourth indication information, where the fourth indication information indicates the first domain, and the fourth indication information is used to determine the second indication information.

Optionally, the transceiver module 1902 is further configured to: receive a second measurement result, where the second measurement result is a measurement result obtained after the terminal device leaves the first domain; or receive a second request message, where the second request message is used to request to set up the RRC connection.

Optionally, the transceiver module 1902 is further configured to send fifth indication information, where the fifth indication information indicates the terminal device to perform data transmission on a third frequency band, and the second measurement result includes a measurement result corresponding to a frequency in the third frequency band.

Optionally, the transceiver module 1902 is further configured to send sixth indication information, where the sixth indication information indicates the terminal device to set up the RRC connection.

In another possible implementation, in some embodiments, the transceiver module 1902 is configured to receive a third measurement result, where the third measurement result is a measurement result existing before a terminal device enters a first domain, the third measurement result includes a measurement result corresponding to at least one frequency, data transmission is barred on at least one first frequency band in the first domain, and a serving radio access network device of the terminal device is the radio access network device; and the transceiver module 1902 is further configured to send seventh indication information, where the seventh indication information indicates the terminal device to perform data transmission on a fourth frequency band, or the seventh indication information indicates the terminal device to release an RRC connection, one or more of the at least one frequency are located in the fourth frequency band, and the at least one first frequency band is different from the fourth frequency band.

Optionally, the processing module 1901 is configured to obtain a first domain, where the first domain is used to determine a first trigger condition; and the transceiver module 1902 is further configured to send the first trigger condition, where the first trigger condition is used to trigger the terminal device to report a third measurement result.

Optionally, the transceiver module 1902 is further configured to: receive a fourth measurement result, where the fourth measurement result is a measurement result obtained after the terminal device leaves the first domain; and send eighth indication information, where the eighth indication information indicates the terminal device to perform data transmission on a fifth frequency band, or the eighth indication information indicates the terminal device to set up an RRC connection, and the fourth measurement result includes a measurement result corresponding to a frequency in the fifth frequency band.

Optionally, the transceiver module 1902 is further configured to send a second trigger condition, where the second trigger condition is determined based on the first domain, and the second trigger condition is used to trigger the terminal device to report the fourth measurement result.

Optionally, the transceiver module 1902 is further configured to receive ninth indication information, where the ninth indication information indicates the first domain, and the ninth indication information is used to determine the first trigger condition.

Optionally, the transceiver module 1902 is further configured to receive tenth indication information, where the tenth indication information indicates the at least one first frequency band, and the tenth indication information is used to determine the first trigger condition.

All related content of the steps in the foregoing method embodiments may be cited in function descriptions of the corresponding functional modules. Details are not described herein again.

In this application, the communication apparatus 190 may be presented in a form of function modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing function.

In some embodiments, when the communication apparatus 190 in FIG. 19 is a chip or a chip system, a function/implementation process of the transceiver module 1902 may be implemented through an input/output interface (or a communication interface) of the chip or the chip system, and a function/implementation process of the processing module 1901 may be implemented through a processor (or a processing circuit) of the chip or the chip system.

The communication apparatus 190 provided in this embodiment may perform the foregoing methods. Therefore, for technical effects that can be achieved by the communication apparatus, refer to the foregoing method embodiments. Details are not described herein again.

In a possible product form, the radio access network device or the terminal device in embodiments of this application may be implemented by using one or more field programmable gate arrays (field programmable gate array, FPGA), a programmable logic device (programmable logic device, PLD), a controller, a state machine, gate logic, a discrete hardware component, any other appropriate circuit, or any combination of circuits that can perform various functions described in this application.

In a possible product form, the radio access network device or the terminal device in embodiments of this application may be implemented by using one or more field programmable gate arrays (field programmable gate array, FPGA), a programmable logic device (programmable logic device, PLD), a controller, a state machine, gate logic, a discrete hardware component, any other appropriate circuit, or any combination of circuits that can perform various functions described in this application.

In another possible product form, the radio access network device or the terminal device in embodiments of this application may be implemented by using a general bus architecture. For ease of description, FIG. 20 is a diagram of a structure of a communication apparatus 2000 according to an embodiment of this application. The communication apparatus 2000 includes a processor 2001 and a transceiver 2002. The communication apparatus 2000 may be a terminal device, or a chip or a chip system in the terminal device. Alternatively, the communication apparatus 2000 may be a radio access network device, or a chip or a module in the radio access network device. FIG. 20 shows only main components of the communication apparatus 2000. In addition to the processor 2001 and the transceiver 2002, the communication apparatus may further include a memory 2003 and an input/output apparatus (not shown in the figure).

Optionally, the processor 2001 is mainly configured to: process a communication protocol and communication data, control the entire communication apparatus, execute a software program, and process data of the software program. The memory 2003 is mainly configured to store the software program and data. The transceiver 2002 may include a radio frequency circuit and an antenna. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, for example, a touchscreen, a display, or a keyboard, is mainly configured to: receive data input by a user, and output data to the user.

Optionally, the processor 2001, the transceiver 2002, and the memory 2003 may be connected through a communication bus.

After the communication apparatus is powered on, the processor 2001 may read the software program in the memory 2003, interpret and execute instructions of the software program, and process data of the software program. When data needs to be sent in a wireless manner, the processor 2001 performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 2001. The processor 2001 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 190 may be in a form of the communication apparatus 2000 shown in FIG. 20.

In an example, a function/implementation process of the processing module 1901 in FIG. 19 may be implemented by the processor 2001 in the communication apparatus 2000 shown in FIG. 20 by invoking computer-executable instructions stored in the memory 2003. A function/implementation process of the transceiver module 1902 in FIG. 19 may be implemented by the transceiver 2002 in the communication apparatus 2000 shown in FIG. 20.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and may be located in one position, or may be distributed on a plurality of network units. Parts displayed as units may be or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a great effect.

Although this application is described with reference to specific features and embodiments thereof, it is clear that various modifications and combinations may be made to them without departing from the scope of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method is applied to a terminal device and comprises:
obtaining a first domain, wherein data transmission is barred on at least one first frequency band in the first domain; and
in the first domain, performing data transmission on a second frequency band, or maintaining a radio resource control RRC inactive state or an RRC idle state, wherein the at least one first frequency band is different from the second frequency band.

2. The method according to claim 1, wherein before entering, by the terminal device, the first domain, the method further comprises:
receiving second indication information, wherein the second indication information indicates the terminal device to perform data transmission on the second frequency band, or the second indication information indicates the terminal device to release an RRC connection.

3. The method according to claim 2, wherein before receiving the second indication information, the method further comprises:
sending a first request message, wherein the first request message is used to request to perform data transmission on the second frequency band, or the first request message is used to request to release the RRC connection.

4. The method according to claim 3, wherein the method further comprises:
determining a first measurement result, wherein the first measurement result comprises a measurement result corresponding to at least one frequency; and
when one or more of the at least one frequency are located in the second frequency band, the first request message is used to request to perform data transmission on the second band; or
when each of the at least one frequency is located in the at least one first frequency band, the first request message is used to request to release the RRC connection.

5. The method according to claim 3 or 4, wherein when a frequency of a primary cell of the terminal device is located in the first frequency band, and a frequency of a secondary cell of the terminal device is located in the second frequency band,
that the first request message is used to request to perform data transmission on the second frequency band comprises:
the first request message is used to request to perform data transmission in the secondary cell.

6. The method according to claim 3 or 4, wherein when a frequency of a primary cell of the terminal device is located in the second frequency band, and a frequency of a secondary cell of the terminal device is located in the first frequency band,
that the first request message is used to request to perform data transmission on the second frequency band comprises:
the first request message is used to request to perform data transmission in the primary cell.

7. The method according to claim 2, wherein before receiving the second indication information, the method further comprises:
determining a first measurement result, wherein the first measurement result is used to determine the second indication information; and
sending the first measurement result.

8. The method according to claim 7, wherein the first measurement result comprises a measurement result corresponding to at least one frequency; and
when one or more of the at least one frequency are located in the second frequency band, the second indication information indicates the terminal device to perform data transmission on the second frequency band; or
when each of the at least one frequency is located in the at least one first frequency band, the second indication information indicates the terminal device to release the RRC connection.

9. The method according to claim 7 or 8, wherein before receiving the second indication information, the method further comprises:
sending third indication information, wherein the third indication information indicates the at least one first frequency band, and the third indication information is used to determine the second indication information.

10. The method according to any one of claims 7 to 9, wherein the method further comprises:
sending fourth indication information, wherein the fourth indication information indicates the first domain, and the fourth indication information is used to determine the second indication information.

11. The method according to any one of claims 1 to 10, wherein the method further comprises:
sending a second measurement result, wherein the second measurement result is a measurement result obtained after the terminal device leaves the first domain; and
sending a second request message after the terminal device leaves the first domain, wherein the second request message is used to request to set up the RRC connection.

12. The method according to claim 11, wherein after sending the second measurement result, the method further comprises:
receiving fifth indication information, wherein the fifth indication information indicates the terminal device to perform data transmission on a third frequency band, and the second measurement result comprises a measurement result corresponding to a frequency in the third frequency band.

13. The method according to claim 11, wherein after sending the first response message, the method further comprises:
receiving sixth indication information, wherein the sixth indication information indicates the terminal device to set up the RRC connection.

14. A communication method, wherein the method is applied to a radio access network device and comprises:
sending second indication information, wherein the second indication information indicates a terminal device to perform data transmission on a second frequency band, or the second indication information indicates the terminal device to release a radio resource control RRC connection, the second frequency band is different from at least one first frequency band in a first domain, and the radio access network device is a serving radio access network device of the terminal device, and is barred from performing data transmission on the at least one first frequency band in the first domain.

15. The method according to claim 14, wherein sending the second indication information comprises:
sending the second indication information before the terminal device enters the first domain.

16. The method according to claim 14 or 15, wherein before sending the second indication information, the method further comprises:
receiving a first request message, wherein the first request message is used to request to perform data transmission on the second frequency band, or the first request message is used to request to release the RRC connection.

17. The method according to claim 15, wherein before sending the second indication information, the method further comprises:
receiving a first measurement result, wherein the first measurement result is used to determine the second indication information.

18. The method according to claim 15 or 17, wherein before sending the second indication information, the method further comprises:
receiving third indication information, wherein the third indication information indicates the at least one first frequency band, and the third indication information is used to determine the second indication information.

19. The method according to any one of claims 15, 17, and 18, wherein the method further comprises:
sending fourth indication information, wherein the fourth indication information indicates the first domain, and the fourth indication information is used to determine the second indication information.

20. The method according to any one of claims 14 to 19, wherein when a frequency of a primary cell of the terminal device is located in the first frequency band, and a frequency of a secondary cell of the terminal device is located in the second frequency band,
that the second indication information indicates the terminal device to perform data transmission on the second frequency band comprises:
the second indication information indicates the terminal device to perform data transmission in the secondary cell.

21. The method according to any one of claims 14 to 19, wherein when a frequency of a primary cell of the terminal device is located in the second frequency band, and a frequency of a secondary cell of the terminal device is located in the first frequency band,
that the second indication information indicates the terminal device to perform data transmission on the second frequency band comprises:
the second indication information indicates the terminal device to perform data transmission in the primary cell.

22. The method according to any one of claims 14 to 21, wherein the method further comprises:
receiving a second measurement result, wherein the second measurement result is a measurement result obtained after the terminal device leaves the first domain; or
receiving a second request message, wherein the second request message is used to request to set up the RRC connection.

23. The method according to claim 22, wherein after receiving the second measurement result, the method further comprises:
sending fifth indication information, wherein the fifth indication information indicates the terminal device to perform data transmission on a third frequency band, and the second measurement result comprises a measurement result corresponding to a frequency in the third frequency band.

24. The method according to claim 22, wherein before receiving the second request message, the method further comprises:
sending sixth indication information, wherein the sixth indication information indicates the terminal device to set up the RRC connection.

25. A communication method, wherein the method is applied to a terminal device and comprises:
obtaining a first trigger condition, wherein the first trigger condition is determined based on a first domain, and data transmission is barred on at least one first frequency band in the first domain; and
when the first trigger condition is met, performing data transmission on a fourth frequency band, or maintaining a radio resource control RRC inactive state or an RRC idle state, wherein the at least one first frequency band is different from the fourth frequency band.

26. The method according to claim 25, wherein when the first trigger condition is met, the method further comprises:
sending a third measurement result, wherein the third measurement result comprises a measurement result corresponding to at least one frequency; and
receiving seventh indication information, wherein the seventh indication information indicates the terminal device to perform data transmission on the fourth frequency band, or the seventh indication information indicates the terminal device to release a radio resource control RRC connection, and one or more of the at least one frequency are located in the fourth frequency band.

27. The method according to claim 25 or 26, wherein the first trigger condition comprises: a distance between the terminal device and a first location is less than or equal to a first threshold, wherein the first location is determined based on the first domain.

28. The method according to claim 25 or 26, wherein the first trigger condition comprises:
a sum of a distance between the terminal device and a first location and a first offset value is less than or equal to a first threshold, wherein the first location is determined based on the first domain; or
a difference between the distance between the terminal device and the first location and the first offset value is less than or equal to the first threshold.

29. The method according to claim 27 or 28, wherein
the first location is a location of a reference point that is in a plurality of reference points on a boundary of the first domain and that is closest to the terminal device;
the first position is located on a line formed by connecting any two reference points on the boundary of the first domain; or
the first location is located in the first domain.

30. The method according to any one of claims 27 to 29, wherein
that the distance between the terminal device and the first location is less than or equal to the first threshold comprises: the distance between the terminal device and the first location is less than or equal to the first threshold within first duration;
that the sum of the distance between the terminal device and the first location and the first offset value is less than or equal to the first threshold comprises:
the sum of the distance between the terminal device and the first location and the first offset value is less than or equal to the first threshold within the first duration; and
that the difference between the distance between the terminal device and the first location and the first offset value is less than or equal to the first threshold comprises:
the difference between the distance between the terminal device and the first location and the first offset value is less than or equal to the first threshold within the first duration.

31. The method according to any one of claims 27 to 30, wherein the first trigger condition further comprises: the terminal device performs data transmission on one or more of the at least one first frequency band.

32. The method according to any one of claims 27 to 31, wherein the first trigger condition further comprises: a distance change of the terminal device in a unit time is greater than or equal to a third threshold.

33. The method according to any one of claims 26 to 32, wherein when a frequency of a primary cell of the terminal device is located in the first frequency band, and a frequency of a secondary cell of the terminal device is located in the fourth frequency band,
that the seventh indication information indicates the terminal device to perform data transmission on the fourth frequency band comprises:
the seventh indication information indicates to perform data transmission in the secondary cell.

34. The method according to any one of claims 26 to 32, wherein when a frequency of a primary cell of the terminal device is located in the fourth frequency band, and a frequency of a secondary cell of the terminal device is located in the first frequency band,
that the seventh indication information indicates the terminal device to perform data transmission on the fourth frequency band comprises:
the seventh indication information indicates to perform data transmission in the primary cell.

35. The method according to any one of claims 25 to 34, wherein the method further comprises:
obtaining a second trigger condition, wherein the second trigger condition is determined based on the first domain; and
when the second trigger condition is met, sending a fourth measurement result, wherein the fourth measurement result is a measurement result obtained after the terminal device leaves the first domain.

36. The method according to claim 35, wherein the method further comprises:
receiving eighth indication information, wherein the eighth indication information indicates the terminal device to perform data transmission on a fifth frequency band, or the eighth indication information indicates the terminal device to set up the RRC connection, and the fourth measurement result comprises a measurement result corresponding to a frequency in the fifth frequency band.

37. The method according to claim 35 or 36, wherein the second trigger condition comprises:
a distance between the terminal device and a second location is greater than or equal to a fourth threshold, wherein the second location is determined based on the first domain.

38. The method according to claim 35 or 36, wherein the second trigger condition comprises:
a sum of a distance between the terminal device and a second location and a second offset value is greater than or equal to a fourth threshold, wherein the second location is determined based on the first domain; or
a difference between the distance between the terminal device and the second location and the second offset value is greater than or equal to the fourth threshold.

39. The method according to claim 37 or 38, wherein
the second location is a location of a reference point that is in a plurality of reference points on a boundary of the first domain and that is closest to the terminal device;
the second location is located on a line formed by connecting any two reference points on the boundary of the first domain; or
the second location is located in the first domain.

40. The method according to any one of claims 37 to 39, wherein
that the distance between the terminal device and the second location is greater than or equal to the fourth threshold comprises:
within second duration, the distance between the terminal device and the second location is greater than or equal to the fourth threshold;
that the sum of the distance between the terminal device and the second location and the second offset value is greater than or equal to the fourth threshold comprises:
within the second duration, the sum of the distance between the terminal device and the second location and the second offset value is greater than or equal to the fourth threshold; and
that the difference between the distance between the terminal device and the second location and the second offset value is greater than or equal to the fourth threshold comprises:
within the second duration, the difference between the distance between the terminal device and the second location and the second offset value is greater than or equal to the fourth threshold.

41. The method according to any one of claims 37 to 40, wherein the second trigger condition further comprises: the terminal device performs data transmission on one or more frequency bands other than the at least one first frequency band, and the fourth measurement result comprises a measurement result corresponding to a frequency in the one or more frequency bands.

42. The method according to any one of claims 37 to 41, wherein a distance change of the terminal device in a unit time is greater than or equal to a fifth threshold.

43. The method according to any one of claims 25 to 42, wherein the method further comprises:
sending ninth indication information, wherein the ninth indication information indicates the first domain, and the ninth indication information is used to determine the first trigger condition.

44. The method according to any one of claims 26 to 43, wherein the method further comprises:
sending tenth indication information, wherein the tenth indication information indicates the at least one first frequency band, and the tenth indication information is used to determine the first trigger condition.

45. A communication method, wherein the method is applied to a radio access network device and comprises:
receiving a third measurement result, wherein the third measurement result is a measurement result existing before a terminal device enters a first domain, the third measurement result comprises a measurement result corresponding to at least one frequency, data transmission is barred on at least one first frequency band in the first domain, and a serving radio access network device of the terminal device is the radio access network device; and
sending seventh indication information, wherein the seventh indication information indicates the terminal device to perform data transmission on a fourth frequency band, or the seventh indication information indicates the terminal device to release a radio resource control RRC connection, one or more of the at least one frequency are located in the fourth frequency band, and the at least one first frequency band is different from the fourth frequency band.

46. The method according to claim 45, wherein before receiving the third measurement result, the method further comprises:
obtaining the first domain, wherein the first domain is used to determine a first trigger condition; and
sending the first trigger condition, wherein the first trigger condition is used to trigger the terminal device to report the third measurement result.

47. The method according to claim 45 or 46, wherein the method further comprises:
receiving a fourth measurement result, wherein the fourth measurement result is a measurement result obtained after the terminal device leaves the first domain; and
sending eighth indication information, wherein the eighth indication information indicates the terminal device to perform data transmission on a fifth frequency band, or the eighth indication information indicates the terminal device to set up the RRC connection, and the fourth measurement result comprises a measurement result corresponding to a frequency in the fifth frequency band.

48. The method according to claim 47, wherein the method further comprises:
sending a second trigger condition, wherein the second trigger condition is determined based on the first domain, and the second trigger condition is used to trigger the terminal device to report the fourth measurement result.

49. A communication method, wherein the method is applied to a terminal device, the terminal device is in a radio resource control RRC inactive state or an RRC idle state, and the method comprises:
receiving first indication information, and receiving the first indication information, wherein the first indication information indicates a first domain, and data transmission is barred on at least one first frequency band in the first domain;
receiving a system message, wherein the system message indicates the unified access control parameter; and
determining, when the unified access control parameter indicates that access of a service corresponding to a first access identity AI and/or a first access category AC is allowed, and the terminal device is located in the first domain, that an access attempt is barred, wherein the first AI is a service identifier of the terminal device, and the first AC is a service type of the terminal device; or
determining, when the unified access control parameter indicates that access of the service corresponding to the first AI and/or the first AC is allowed, and the terminal device is located outside the first domain, that the access attempt is allowed.

50. The method according to claim 49, wherein determining, when the unified access control parameter indicates that access of the service corresponding to the first AI and/or the first AC is allowed, and the terminal device is located in the first domain, that the access attempt is barred comprises:
performing access barring check based on the first AI and/or the first AC and the unified access control parameter, to obtain a first result, wherein when the unified access control parameter indicates that access of the terminal device corresponding to the AI and/or the AC is allowed, the first result is that the access attempt is allowed, or when the unified access control parameter indicates that access of the terminal device corresponding to the AI and/or the AC is barred, the first result is that the access attempt is barred; and
when the terminal device is located in the first domain, and the first result is that the access attempt is allowed, changing the first result to that the access attempt is barred.

51. The method according to claim 49, wherein determining, when the unified access control parameter indicates that access of a terminal device corresponding to the AI and/or the AC is allowed, and the terminal device is located in the first domain, that the access attempt is barred comprises:
when the terminal device is located in the first domain, performing access barring check based on the first AI and/or the first AC and the unified access control parameter, to obtain a second result, wherein the second result is that the access attempt is barred.

52. A communication apparatus, wherein the communication apparatus comprises a transceiver module and a processing module;
the transceiver module is configured to perform a receiving behavior or a sending behavior in the method according to any one of claims 1 to 13, or configured to perform a receiving behavior or a sending behavior in the method according to any one of claims 14 to 24, or configured to perform a receiving behavior or a sending behavior in the method according to any one of claims 25 to 44, or configured to perform a receiving behavior or a sending behavior in the method according to any one of claims 45 to 48, or configured to perform a receiving behavior or a sending behavior in the method according to any one of claims 49 to 51; and
the processing module is configured to perform a processing behavior in the method according to any one of claims 1 to 13, or configured to perform a processing behavior in the method according to any one of claims 14 to 24, or configured to perform a processing behavior in the method according to any one of claims 25 to 44, or configured to perform a processing behavior in the method according to any one of claims 45 to 48, or configured to perform a processing behavior in the method according to any one of claims 49 to 51.

53. A communication apparatus, wherein the communication apparatus comprises a processor; and the processor is configured to run a computer program or instructions, to cause the communication apparatus to perform the method according to any one of claims 1 to 13, or cause the communication apparatus to perform the method according to any one of claims 14 to 24, or cause the communication apparatus to perform the method according to any one of claims 25 to 44, or cause the communication apparatus to perform the method according to any one of claims 45 to 48, or cause the communication apparatus to perform the method according to any one of claims 49 to 51.

54. A computer-readable storage medium, wherein the computer-readable storage medium stores computer instructions or a program, and when the computer instructions or the program is run on a computer, the method according to any one of claims 1 to 13 is performed, or the method according to any one of claims 14 to 24 is performed, or the method according to any one of claims 25 to 44 is performed, or the method according to any one of claims 44 to 48 is performed, or the method according to any one of claims 49 to 51 is performed.

55. A computer program product, wherein when the computer program product runs on a communication apparatus, the communication apparatus is caused to perform the method according to any one of claims 1 to 13, or the communication apparatus is caused to perform the method according to any one of claims 14 to 24, or the communication apparatus is caused to perform the method according to any one of claims 25 to 44, or the communication apparatus is caused to perform the method according to any one of claims 45 to 48, or the communication apparatus is caused to perform the method according to any one of claims 49 to 51.

56. A chip, comprising a processor, wherein the processor is coupled to a memory, the memory is configured to store a program or instructions, and when the program or the instructions are executed by the processor, the chip is caused to perform the method according to any one of claims 1 to 13, or the chip is caused to perform the method according to any one of claims 14 to 24, or the chip is caused to perform the method according to any one of claims 25 to 44, or the chip is caused to perform the method according to any one of claims 45 to 48, or the chip is caused to perform the method according to any one of claims 49 to 51.
